# EUROPÄISCHE PATENTANMELDUNG

(11) **EP 3 883 031 A1**
(43) Veröffentlichungstag der Anmeldung: **22.09.2021**
(21) Anmeldenummer: 21159338.9
(22) Anmeldetag: 25.02.2021
(51) Int. Cl.: H01M 8/248, H01M 8/2483, H01M 8/2484, H01M 8/241, H01M 8/1018

(54) **BRENNSTOFFZELLENVORRICHTUNG**

(30) Priorität: 18.03.2020 DE 102020107482
(71) Anmelder: VERITAS AG, 63571 Gelnhausen (DE)
(72) Erfinder: PASCUZZI, Sergio, 63589 Linsengericht (DE); GEESMANN, Urs, 63571 Gelnhausen (DE); HATTASS, Dirk, 63584 Gruendau (DE); GRASMUECK, Thomas, 63549 Ronneburg (DE)
(74) Vertreter: Patentship Patentanwaltsgesellschaft mbH

(57) **Zusammenfassung**

Die vorliegende Erfindung betrifft Brennstoffzellenvorrichtung (100), mit einem Brennstoffzellenelement (101) zum Bereitstellen von elektrischer Energie durch die Oxidation eines Brennstoffs mit einem Oxidationsmittel, einem Verteilerelement (109), welches eine Fluidzuführung (111) zum Zuführen von Brennstoff und Oxidationsmittel zu dem Brennstoffzellenelement (101) und eine Fluidabführung (113) zum Abführen von Brennstoff, Oxidationsmittel und Reaktionsprodukt von dem Brennstoffzellenelement (101) aufweist, einem Versteifungselement (123), welches zwischen dem Verteilerelement (109) und dem Brennstoffzellenelement (101) angeordnet ist, wobei das Versteifungselement (123) gegen das Brennstoffzellenelement (101) anpressbar ist, um das Brennstoffzellenelement (101) zu versteifen, wobei das Versteifungselement (123) einen elektrisch leitenden Bereich (125) aufweist, welcher mit dem Brennstoffzellenelement (101) elektrisch leitend verbunden und ausgebildet ist, von dem Brennstoffzellenelement (101) bereitgestellte elektrische Energie abzuführen, wobei das Versteifungselement (123) einen fluidführenden Bereich (127) aufweist, welcher mit der Fluidzuführung (111) und Fluidabführung (113) des Verteilerelements (109) und welcher mit dem Brennstoffzellenelement (101) fluidtechnisch verbunden ist, um Brennstoff und Oxidationsmittel von der Fluidzuführung (111) durch den fluidführenden Bereich (127) dem Brennstoffzellenelement (101) zuzuführen, und um Brennstoff, Oxidationsmittel und Reaktionsprodukt von dem Brennstoffzellenelement (101) durch den fluidführenden Bereich (127) und die Fluidabführung (113) des Verteilerelements (109) abzuführen, und wobei der fluidführende Bereich (127) und der elektrisch leitende Bereich (125) integral in dem Versteifungselement (123) gebildet sind.

## Beschreibung

Die vorliegende Erfindung betrifft eine Brennstoffzellenvorrichtung, insbesondere eine Brennstoffzellenvorrichtung mit einem Brennstoffzellenelement zum Bereitstellen von elektrischer Energie durch die Oxidation eines Brennstoffs mit einem Oxidationsmittel.

In einer Vielzahl von industriellen Anwendungen, insbesondere in elektrisch betriebenen Fahrzeugen, wird oftmals ein Brennstoffzellenelement eingesetzt, um elektrische Energie bereitzustellen. Ein Brennstoffzellenelement ist ausgebildet die durch eine chemische Reaktion des Brennstoffs mit dem Oxidationsmittel freigesetzte chemische Energie in elektrische Energie umzuwandeln. Dadurch, dass der Brennstoff und das Oxidationsmittel dem Brennstoffzellenelement kontinuierlich zugeführt wird, kann die elektrische Energie durch das Brennstoffzellenelement kontinuierlich bereitgestellt werden. Insbesondere kann ein Brennstoffzellenelement ein Wasserstoff-Sauerstoff-Brennstoffzellenelement umfassen, bei dem als Brennstoff Wasserstoff und als Oxidationsmittel Sauerstoff eingesetzt wird.

Herkömmliche Brennstoffzellenvorrichtungen mit einem Brennstoffzellenelement weisen oftmals einen komplexen Aufbau mit einer Vielzahl von unterschiedlichen Bauteilen auf, wodurch der Konstruktionsaufwand und damit auch die Herstellungskosten von entsprechenden herkömmlichen Brennstoffzellenvorrichtungen oftmals hoch sind.

In der DE 10 2017 212 085 A1 ist eine Brennstoffzellenvorrichtung mit mehreren Brennstoffzellenelementen offenbart, welche längs einer Stapelrichtung aufeinandergestapelt sind.

Es ist die der Erfindung zugrundeliegende Aufgabe, eine Brennstoffzellenvorrichtung bereitzustellen, welche einfach und kostengünstig zu fertigen ist.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Brennstoffzellenvorrichtung gelöst, mit einem Brennstoffzellenelement zum Bereitstellen von elektrischer Energie durch die Oxidation eines Brennstoffs mit einem Oxidationsmittel, einem Verteilerelement, welches eine Fluidzuführung zum Zuführen von Brennstoff und Oxidationsmittel zu dem Brennstoffzellenelement und eine Fluidabführung zum Abführen von Brennstoff, Oxidationsmittel und Reaktionsprodukt von dem Brennstoffzellenelement aufweist, einem Versteifungselement, welches zwischen dem Verteilerelement und dem Brennstoffzellenelement angeordnet ist, wobei das Versteifungselement gegen das Brennstoffzellenelement anpressbar ist, um das Brennstoffzellenelement zu versteifen, wobei das Versteifungselement einen elektrisch leitenden Bereich aufweist, welcher mit dem Brennstoffzellenelement elektrisch leitend verbunden und ausgebildet ist, von dem Brennstoffzellenelement bereitgestellte elektrische Energie abzuführen, wobei das Versteifungselement einen fluidführenden Bereich aufweist, welcher mit der Fluidzuführung und Fluidabführung des Verteilerelements und welcher mit dem Brennstoffzellenelement fluidtechnisch verbunden ist, um Brennstoff und Oxidationsmittel von der Fluidzuführung durch den fluidführenden Bereich dem Brennstoffzellenelement zuzuführen, und um Brennstoff, Oxidationsmittel und Reaktionsprodukt von dem Brennstoffzellenelement durch den fluidführenden Bereich und die Fluidabführung des Verteilerelements abzuführen, und wobei der fluidführende Bereich und der elektrisch leitende Bereich integral in dem Versteifungselement gebildet sind.

Eine integrale Ausbildung des fluidführenden Bereichs und des elektrisch leitenden Bereichs in dem Versteifungselement gemäß dem ersten Aspekt spezifiziert, dass der fluidführende Bereich und der elektrisch leitende Bereich in einem einzigen Bauteil, dem Versteifungselement, geformt sind. Insbesondere ist der elektrisch leitende Bereich kraftschlüssig, formschlüssig, und/oder stoffschlüssig, insbesondere verschweißt, mit dem fluidführenden Bereich verbunden. Insbesondere ist der elektrisch leitende Bereich gegossen oder gewalzt mit dem fluidführenden Bereich ausgebildet. Insbesondere ist der elektrisch leitende Bereich und der fluidführende Bereich einstückig in dem Versteifungselement gebildet.

Durch die integrale Ausbildung des fluidführenden Bereichs und des elektrisch leitenden Bereichs in dem Versteifungselement gemäß dem ersten Aspekt wird der technische Vorteil erreicht, dass drei Funktionalitäten der Brennstoffzellenvorrichtung in einem einzigen Bauteil, dem Versteifungselement, vereinigt werden können, wodurch der Herstellungsaufwand und damit auch die Herstellungskosten der Brennstoffzellenvorrichtung gemäß der vorliegenden Anmeldung wirksam reduziert werden können.

Die erste Funktionalität umfasst eine wirksame Versteifung des Brennstoffzellenelements durch die Anpressbarkeit des Versteifungselements an das Brennstoffzellenelement, wodurch ein Durchbiegen des Brennstoffzellenelements verhindert wird. Die zweite Funktionalität umfasst eine wirksame Abführung der von dem Brennstoffzellenelement bereitgestellten elektrischen Energie durch den elektrisch leitenden Bereich des Versteifungselements. Die dritte Funktionalität umfasst eine wirksame Fluidzuführung zu dem Brennstoffzellenelement und eine Fluidabführung von dem Brennstoffzellenelement durch den fluidführenden Bereich des Versteifungselements.

In herkömmlichen aus dem Stand der Technik bekannten Brennstoffzellenvorrichtungen werden die drei genannten Funktionalitäten durch unterschiedliche Bauteile bereitgestellt, wodurch der Herstellungsaufwand und damit auch die Herstellungskosten entsprechend herkömmlicher Brennstoffzellenvorrichtungen im Vergleich zu der Brennstoffzellenvorrichtung gemäß der vorliegenden Anmeldung erhöht sind.

Das Brennstoffzellenelement gemäß der vorliegenden Anmeldung umfasst insbesondere ein Wasserstoff-Sauerstoff-Brennstoffzellenelement, bei dem als Brennstoff Wasserstoff und bei dem als Oxidationsmittel Sauerstoff verwendet werden, wobei als Reaktionsprodukt Wasser entsteht. Alternativ kann das Brennstoffzellenelement gemäß der vorliegenden Anmeldung insbesondere auch andere Brennstoffzellenelemente umfassen, in welchen andere Brennstoffe, wie insbesondere Methanol, Butan und/oder Erdgas verwendet werden.

Das Brennstoffzellenelement gemäß der vorliegenden Anmeldung umfasst insbesondere eine Mehrzahl von einzelnen Brennstoffzellen, welche, insbesondere übereinander, in dem Brennstoffzellenelement angeordnet sind, um einen Brennstoffzellen-Stack bereitzustellen, welcher eine vorteilhafte elektrische Energiemenge, insbesondere eine hohe Spannung, bereitstellt. Insbesondere kann das Brennstoffelement gemäß der vorliegenden Anmeldung 50 bis 500, insbesondere 80 bis 400 einzelne übereinander angeordnete Brennstoffzellen umfassen.

Insbesondere umfasst das Brennstoffzellenelement gemäß der vorliegenden Anmeldung ein Polymerelektrolyt-Membran-Brennstoffzellenelement (PEMFC), welches mit Wasserstoff als Brennstoff und Sauerstoff als Oxidationsmittel betrieben wird, wobei das Reaktionsprodukt Wasser entsteht und wobei die einzelnen Brennstoffzellen eine Mehrzahl von Bipolarplatten umfassen.

Um das insbesondere als Brennstoffzellen-Stack ausgebildete Brennstoffzellenelement wirksam zu versteifen, ist das Versteifungselement insbesondere mit einer hohen Kraft, insbesondere zwischen 20 kN und 30 kN, gegen das Brennstoffzellenelement anpressbar. Durch das Anpressen des Versteifungselements gegen das Brennstoffzellenelement wird insbesondere eine wirksame fluidtechnische Abdichtung zwischen den einzelnen Brennstoffzellen des Brennstoffzellen-Stacks sichergestellt, so dass ein Austreten von Brennstoff, Oxidationsmittel und/oder Reaktionsprodukt verhindert werden kann.

Um das insbesondere als Brennstoffzellen-Stack ausgebildete Brennstoffzellenelement wirksam zu versteifen, ist das Versteifungselement insbesondere eben, bzw. flach, gegen das Brennstoffzellenelement, insbesondere gegen die Brennstoffzellen-Stacks, anpressbar, so dass eine gleichmäßige Krafteinleitung über die gesamte Oberfläche des Brennstoffzellenelements, insbesondere der Brennstoffzellen-Stacks, erfolgt.

Das Versteifungselement ist insbesondere als eine Versteifungsplatte geformt.

Um das Versteifungselement wirksam gegen das Brennstoffzellenelement anzupressen, umfasst die Brennstoffzellenvorrichtung gemäß der vorliegenden Anmeldung insbesondere eine Mehrzahl von Befestigungsvorrichtungen, insbesondere Befestigungsschrauben, Befestigungsbänder und/oder Befestigungsbolzen, welche ausgebildet sind, das Verteilerelement mit einer Kraft zu beaufschlagen, wodurch das Versteifungselement, welches zwischen dem Verteilerelement und dem Brennstoffzellenelement angeordnet ist, ebenfalls mit einer Kraft beaufschlagt wird und wirksam gegen das Brennstoffzellenelement angepresst wird, so dass eine wirksame Versteifung des Brennstoffzellenelements, insbesondere des Brennstoffzellen-Stacks, sichergestellt wird.

Das Verteilerelement ist insbesondere als eine Verteilerplatte geformt.

Insbesondere weist das Verteilerelement eine Aussparung auf, welche insbesondere an einer dem Brennstoffzellenelement zugewandten Verteilerelementunterseite des Verteilerelements angeordnet ist, wobei das Versteifungselement in der Aussparung des Verteilerelements aufgenommen ist. Dadurch kann eine passgenaue Anpassung des Versteifungselements an die Verteilerelementunterseite sichergestellt werden.

Das Versteifungselement weist ferner einen elektrisch leitenden Bereich auf, welcher mit dem Brennstoffzellenelement elektrisch leitend verbunden und ausgebildet ist, von dem Brennstoffzellenelement bereitgestellte elektrische Energie abzuführen. Dadurch kann sichergestellt werden, dass die durch das Brennstoffzellenelement bereitgestellte elektrische Energie durch den elektrisch leitenden Bereich des Versteifungselements wirksam einer elektrischen Batterie, zugeführt werden kann. Die in der elektrischen Batterie gespeicherte elektrische Energie kann anschließend wirksam einem elektrischen Verbraucher, insbesondere Elektromotor, zur Verfügung gestellt werden.

Insbesondere ist der elektrisch leitende Bereich des Versteifungselements an einer Versteifungselementunterseite angeordnet, wobei die Versteifungselementunterseite der Elementoberseite des Brennstoffzellenelements zugewandt ist. Somit kann eine direkte elektrisch leitende Verbindung zwischen der Versteifungselementunterseite und der Elementoberseite des Brennstoffzellenelements erreicht werden.

Alternativ kann der elektrisch leitende Bereich des Versteifungselements an einer Versteifungselementunterseite und an einer Versteifungselementoberseite angeordnet sein, wobei die Versteifungselementunterseite der Elementoberseite des Brennstoffzellenelements zugewandt ist, und wobei die Versteifungselementoberseite einer Verteilerelementunterseite des Verteilerelements zugewandt ist.

Insbesondere weist der elektrisch leitende Bereich des Versteifungselements einen ersten elektrischen Pol, insbesondere Pluspol oder Minuspol, auf, wobei die Brennstoffzellenvorrichtung einen weiteren elektrisch leitenden Bereich aufweist, welcher mit dem Brennstoffzellenelement elektrisch leitend verbunden ist, und welcher einen zweiten elektrischen Pol, insbesondere Minuspol oder Pluspol, aufweist.

Alternativ umfasst der elektrisch leitende Bereich des Versteifungselements insbesondere zwei elektrisch leitende Unterbereiche, welcher voneinander elektrisch isoliert in dem elektrisch leitenden Bereich angeordnet sind, wobei einer der beiden elektrisch leitenden Unterbereiche einen ersten elektrischen Pol, insbesondere Pluspol oder Minuspol, aufweist, und wobei der andere der beiden elektrisch leitenden Unterbereiche einen zweiten elektrischen Pol, insbesondere Minuspol oder Pluspol, aufweist.

Insbesondere weist der elektrisch leitende Bereich und/oder die elektrisch leitenden Unterbereiche des Versteifungselements ein Material auf, welches eine größere elektrische Leitfähigkeit aufweist, als ein Material des fluidführenden Bereichs des Versteifungselements.

Insbesondere umfasst der elektrisch leitende Bereich und/oder die elektrisch leitenden Unterbereiche des Versteifungselements ein elektrisch leitendes Metall, insbesondere Kupfer, Gold, Silber und/oder Zinn. Insbesondere umfasst der fluidführende Bereichs des Versteifungselements ein elektrisch leitendes Metall, welches eine geringere elektrische Leitfähigkeit als die elektrische Leitfähigkeit des elektrisch leitende Bereichs aufweist, und insbesondere Eisen, Aluminium und/oder Stahl, insbesondere Edelstahl, umfasst.

Insbesondere ragt der elektrisch leitende Bereich und/oder die elektrisch leitenden Unterbereiche des Versteifungselements über das Verteilerelement und/oder über das Brennstoffzellenelement zumindest abschnittsweise hinaus. Durch das zumindest abschnittsweise Hinausragen des elektrisch leitenden Bereichs und/oder der elektrisch leitenden Unterbereiche über das Verteilerelement und/oder über das Brennstoffzellenelement sind der elektrisch leitende Bereich und/oder die elektrisch leitenden Unterbereiche des Versteifungselements vorteilhaft exponiert, um wirksam eine elektrisch leitende Verbindung zum Abführen der bereitgestellten elektrischen Energie anzubringen.

Insbesondere ragt der elektrisch leitende Bereich und/oder die elektrisch leitenden Unterbereiche des Versteifungselements über das Verteilerelement und/oder über das Brennstoffzellenelement vollständig hinaus.

Insbesondere ragt der elektrisch leitende Bereich und/oder die elektrisch leitenden Unterbereiche des Versteifungselements über das Verteilerelement und/oder über das Brennstoffzellenelement nur abschnittsweise hinaus und umfasst der elektrisch leitende Bereich und/oder die elektrisch leitenden Unterbereiche des Versteifungselements insbesondere seitlich an dem Versteifungselement angeordnete Kontaktlaschen. Insbesondere erstreckt sich der elektrisch leitende Bereich und/oder die elektrisch leitenden Unterbereiche des Versteifungselements im Bereich der Kontaktlaschen bis zu einem Randbereich des Versteifungselements.

Insbesondere ist bereichsweise zwischen dem elektrisch leitende Bereich und seitlichen Rändern des Versteifungselement ein Randbereich des Versteifungselements angeordnet. Insbesondere weist der Randbereich des Versteifungselements eine geringere elektrische Leitfähigkeit als der elektrisch leitende Bereich des Versteifungselements auf.

Der fluidführende Bereich des Versteifungselements stellt sowohl eine fluidtechnische Verbindung mit der Fluidzuführung und mit der Fluidabführung des Verteilerelements als auch eine fluidtechnische Verbindung mit dem Brennstoffzellenelement sicher, um Brennstoff und Oxidationsmittel von der Fluidzuführung durch den fluidführenden Bereich dem Brennstoffzellenelement zuzuführen, und um Brennstoff, Oxidationsmittel und Reaktionsprodukt von dem Brennstoffzellenelement durch den fluidführenden Bereich und durch die Fluidabführung des Verteilerelements abzuführen.

Durch die chemische Reaktion des Brennstoffs mit dem Oxidationsmittel in dem Brennstoffzellenelement entsteht Reaktionsprodukt, wobei das Reaktionsprodukt zusammen mit nicht reagiertem Brennstoff und nicht reagiertem Oxidationsmittel durch die Fluidabführung des Verteilerelements abgeführt wird.

Um eine kontrollierte chemische Reaktion des Brennstoffs mit dem Oxidationsmittel zum Bereitstellen von elektrischer Energie in dem Brennstoffzellenelement zu gewährleisten, ist der Brennstoff und das Oxidationsmittel in dem Brennstoffzellenelement, insbesondere in den Brennstoffzellen des Brennstoffzellenelements, durch einen Elektrolyten, insbesondere eine semipermeable Membran, voneinander getrennt in separaten Kammern mit jeweils einer Elektrode angeordnet. Durch den Elektrolyten, insbesondere semipermeable Membran, kann ein lonenaustausch ermöglicht werden, ohne dass der Brennstoff und das Oxidationsmittel direkt in Kontakt kommen.

Ist das Brennstoffzellenelement gemäß der vorliegenden Anmeldung insbesondere als ein Wasserstoff-Sauerstoff-Brennstoffzellenelement ausgebildet, umfasst der Brennstoff Wasserstoff, umfasst das Oxidationsmittel Sauerstoff, und umfasst das chemische Reaktionsprodukt von Wasserstoff und Sauerstoff Wasser, welches als Reaktionsprodukt durch die Fluidabführung des Verteilerelements abgeführt wird, wobei das als chemische Reaktionsprodukt entstehende Wasser insbesondere in einem gasförmigen Aggregatszustand als Wasserdampf vorliegt, und damit vorteilhaft durch die Fluidabführung des Verteilerelements abgeführt werden kann.

Durch die chemische Reaktion des Brennstoffs, insbesondere Wasserstoff, mit dem Oxidationsmittel, insbesondere Sauerstoff, in dem Brennstoffzellenelement wird neben der bereitgestellten elektrischen Energie auch Wärme freigesetzt, welche insbesondere aus dem Brennstoffzellenelement abgeführt wird, um einen Wärmestau in dem Brennstoffzellenelement zu vermeiden.

Gemäß einer Ausführungsform ist die Fluidzuführung des Verteilerelements ausgebildet neben dem Brennstoff und dem Oxidationsmittel auch Kühlmittel zu dem Brennstoffzellenelement zuzuführen, und ist die Fluidabführung des Verteilerelements ausgebildet neben dem Brennstoff, dem Oxidationsmittel und dem Reaktionsprodukt auch Kühlmittel von dem Brennstoffzellenelement abzuführen. Hierbei nimmt das dem Brennstoffzellenelement durch die Fluidzuführung zugeführte Kühlmittel die durch das Brennstoffzellenelement freigesetzte Wärme auf, und wird als erwärmtes Kühlmittel durch die Fluidabführung des Verteilerelements abgeführt. Insbesondere umfasst das Kühlmittel Kühlflüssigkeit, wobei die Kühlflüssigkeit insbesondere entsalztes Wasser und Glykol umfasst.

Wird Kühlmittel zugeführt, ist der fluidtechnische Bereich des Versteifungselements ausgebildet, Brennstoff, Oxidationsmittel und Kühlmittel von der Fluidzuführung durch den fluidführenden Bereich dem Brennstoffzellenelement zuzuführen, und ist der fluidtechnische Bereich des Versteifungselements ausgebildet Brennstoff, Oxidationsmittel, Reaktionsprodukt und Kühlmittel von dem Brennstoffzellenelement durch den fluidführenden Bereich und die Fluidabführung des Verteilerelements abzuführen.

Insbesondere wird das Kühlmittel von der Fluidzuführung durch den fluidführenden Bereich einem Innenraum des Brennstoffzellenelements zugeführt und wird das Kühlmittel von dem Innenraum des Brennstoffzellenelements durch den fluidführenden Bereich und durch die Fluidabführung des Verteilerelements abgeführt. Insbesondere wird hierbei das dem Innenraum des Brennstoffzellenelements zugeführte Kühlmittel separat von den Brennstoffzellen des Brennstoffzellenelements in dem Brennstoffzellenelement geführt.

Gemäß einer alternativen oder zusätzlichen Ausführungsform kann die Batteriezellenvorrichtung ein mit dem Brennstoffzellenelement thermisch gekoppeltes Wärmeabführelement, insbesondere ein metallisches Wärmeabführelement aufweisen, welches ausgebildet die durch das Brennstoffzellenelement freigesetzte Wärme von dem Brennstoffzellenelement abzuführen.

Insbesondere umfasst der fluidführende Bereich des Versteifungselements eine Mehrzahl von Fluidzuführungsöffnungen, welche insbesondere den fluidführenden Bereich des Versteifungselements durchbrechen, um eine wirksame fluidtechnische Verbindung zwischen der Fluidzuführung des Verteilerelements und dem Brennstoffzellenelement bereitzustellen.

Insbesondere sind die Fluidzuführungsöffnungen jeweils mit einem Fluidzuführungskanal des Brennstoffzellenelements fluidtechnisch verbunden, um ein wirksames Zuführen von Brennstoff, Oxidationsmittel und/oder Kühlmittel zu den Brennstoffzellen des Brennstoffzellenelements sicherzustellen.

Insbesondere umfasst der fluidführende Bereich des Versteifungselements eine Mehrzahl von Fluidabführungsöffnungen, welche insbesondere den fluidführenden Bereich des Versteifungselements durchbrechen, um eine wirksame fluidtechnische Verbindung zwischen dem Brennstoffzellenelement und der Fluidabführung des Verteilerelements bereitzustellen.

Insbesondere ist jeweils ein Fluidabführungskanal des Brennstoffzellenelements mit der jeweiligen Fluidzuführungsöffnung fluidtechnisch verbunden, um ein wirksames Abführen von Brennstoff, Oxidationsmittel, Reaktionsprodukt und/oder Kühlmittel von den Brennstoffzellen des Brennstoffzellenelements sicherzustellen.

Insbesondere ist ein als Kühlmittelzuführungskanal ausgebildeter Fluidzuführungskanal des Brennstoffzellenelements direkt mit einem als Kühlmittelabführungskanal ausgebildeten Fluidabführungskanal fluidtechnisch verbunden, um eine kontinuierliche Zuführung und Abführung von Kühlmittel in dem Brennstoffzellenelement sicherzustellen. Insbesondere ist der Kühlmittelzuführungskanal und der Kühlmittelabführungskanal mit den jeweiligen Brennstoffzellen des Brennstoffzellenelements thermisch gekoppelt. Insbesondere ist der Kühlmittelzuführungskanal und der Kühlmittelabführungskanal mit den jeweiligen Brennstoffzellen des Brennstoffzellenelements nicht fluidtechnisch gekoppelt.

Insbesondere ist ein als Brennstoffzuführungskanal ausgebildeter Fluidzuführungskanal des Brennstoffzellenelements und ist ein als Oxidationsmittelzuführungskanal ausgebildeter Fluidzuführungskanal des Brennstoffzellenelements mit den Brennstoffzellen des Brennstoffzellenelements direkt fluidtechnisch gekoppelt, um den Brennstoff und das Oxidationsmittel direkt den Brennstoffzellen zuzuführen.

Insbesondere ist ein als Brennstoffabführungskanal ausgebildeter Fluidabführungskanal des Brennstoffzellenelements und ist ein als Oxidationsmittelabführungskanal ausgebildeter Fluidabführungskanal des Brennstoffzellenelements mit den Brennstoffzellen des Brennstoffzellenelements direkt fluidtechnisch gekoppelt, um den Brennstoff, das Oxidationsmittel und das gebildete Reaktionsprodukt direkt aus den Brennstoffzellen abzuführen.

In einer vorteilhaften Ausführungsform ist das Versteifungselement gegen eine Elementoberseite des Brennstoffzellenelements anpressbar, wobei die Brennstoffzellenvorrichtung eine Endplatte und ein weiteres Versteifungselement aufweist, wobei das weitere Versteifungselement zwischen der Endplatte und einer Elementunterseite des Brennstoffzellenelements angeordnet ist, wobei das weitere Versteifungselement gegen die Elementunterseite des Brennstoffzellenelements anpressbar ist, um das Brennstoffzellenelement zu versteifen, wobei das weitere Versteifungselement einen weiteren elektrisch leitenden Bereich aufweist, welcher mit dem Brennstoffzellenelement elektrisch leitend verbunden und ausgebildet ist, von dem Brennstoffzellenelement bereitgestellte elektrische Energie abzuführen.

Dadurch wird der technische Vorteil erreicht, dass durch das Anpressen des Versteifungselements gegen die Elementoberseite und durch das Anpressen des weiteren Versteifungselements gegen die Elementunterseite, das Brennstoffzellenelement beidseitig, insbesondere von oben und von unten, versteift wird.

Das weitere Versteifungselement ist insbesondere als eine weitere Versteifungsplatte geformt.

Ist das Brennstoffzellenelement insbesondere als ein Brennstoffzellen-Stack ausgebildet, wird durch das beidseitige Anpressen des Versteifungselements und des weiteren Versteifungselements an die Elementoberseite des Brennstoffzellenelements und an die Elementunterseite des Brennstoffzellenelements eine besonders wirksame fluidtechnische Abdichtung zwischen den einzelnen Brennstoffzellen des Brennstoffzellen-Stacks sichergestellt, so dass ein Austreten von Brennstoff, Oxidationsmittel und/oder Reaktionsprodukt verhindert werden kann.

Insbesondere umfasst die Brennstoffzellenvorrichtung gemäß der vorliegenden Anmeldung eine Mehrzahl von Befestigungsvorrichtungen, insbesondere Befestigungsschrauben, Befestigungsbänder und/oder Befestigungsbolzen, welche ausgebildet sind, das Verteilerelement und die Endplatte mit einer Kraft zu beaufschlagen, wodurch das Versteifungselement, welches zwischen dem Verteilerelement und der Elementoberseite des Brennstoffzellenelements angeordnet ist, ebenfalls mit einer Kraft beaufschlagt wird und wirksam gegen die Elementoberseite des Brennstoffzellenelements angepresst wird, und wodurch das weitere Versteifungselement, welches zwischen der Endplatte und dem Elementunterseite des Brennstoffzellenelements angeordnet ist, ebenfalls mit einer Kraft beaufschlagt wird und wirksam gegen die Elementunterseite des Brennstoffzellenelements angepresst wird. Somit wird eine wirksame beidseitige Versteifung des Brennstoffzellenelements, insbesondere des Brennstoffzellen-Stacks, sichergestellt.

Durch den mit dem Brennstoffzellenelement elektrisch leitend verbundenen elektrisch leitenden Bereich des Versteifungselements und durch den mit dem Brennstoffzellenelement elektrisch leitend verbundenen weiteren elektrisch leitenden Bereich des weiteren Versteifungselements kann elektrische Energie wirksam von dem Brennstoffzellenelement abgeführt werden. Insbesondere weist der elektrisch leitende Bereich des Versteifungselements einen ersten elektrischen Pol, insbesondere Pluspol oder Minuspol, auf, und insbesondere weist der weitere elektrisch leitende Bereich des weiteren Versteifungselements einen zweiten elektrischen Pol, insbesondere Minuspol oder Pluspol, auf.

Insbesondere ist der elektrisch leitende Bereich des Versteifungselements an einer Versteifungselementunterseite angeordnet, wobei die Versteifungselementunterseite der Elementoberseite des Brennstoffzellenelements zugewandt ist. Somit kann eine direkte elektrisch leitende Verbindung zwischen der Versteifungselementunterseite und der Elementoberseite des Brennstoffzellenelements erreicht werden.

Insbesondere ist der weitere elektrisch leitende Bereich des weiteren Versteifungselements an einer Versteifungselementoberseite angeordnet, wobei die Versteifungselementoberseite der Elementunterseite des Brennstoffzellenelements zugewandt ist. Somit kann eine direkte elektrisch leitende Verbindung zwischen der Versteifungselementoberseite und der Elementunterseite des Brennstoffzellenelements erreicht werden.

Alternativ kann der weitere elektrisch leitende Bereich des weiteren Versteifungselements an einer weiteren Versteifungselementunterseite und an einer weiteren Versteifungselementoberseite angeordnet sein, wobei die weitere Versteifungselementoberseite der Elementunterseite des Brennstoffzellenelements zugewandt ist, und wobei die weitere Versteifungselementunterseite einer Endplattenoberseite der Endplatte zugewandt ist.

Insbesondere weist das weitere Versteifungselement keinen fluidführenden Bereich auf, sondern schließt fluiddicht mit der Elementunterseite des Brennstoffzellenelements ab, um ein Austreten von Brennstoff, Oxidationsmittel, Reaktionsprodukt und/oder Kühlmittel aus dem Brennstoffzellenelement zu verhindern.

Insbesondere weist die Endplatte eine weitere Aussparung auf, welche insbesondere an einer dem Brennstoffzellenelement zugewandten Endplattenoberseite der Endplatte angeordnet ist, wobei das weitere Versteifungselement in der weiteren Aussparung der Endplatte aufgenommen ist. Dadurch kann eine passgenaue Anpassung des weiteren Versteifungselements an die Endplattenoberseite sichergestellt werden.

Insbesondere ragt der weitere elektrisch leitende Bereich des weiteren Versteifungselements über die Endplatte und/oder das Brennstoffzellenelement hinaus. Durch das Hinausragen des weiteren elektrisch leitenden Bereichs über die Endplatte und/oder das Brennstoffzellenelement ist der weitere elektrisch leitende Bereich des weiteren Versteifungselements vorteilhaft exponiert, um wirksam eine elektrisch leitende Verbindung zum Abführen der bereitgestellten elektrischen Energie anzubringen.

In einer vorteilhaften Ausführungsform umfasst die Brennstoffzellenvorrichtung eine Mehrzahl von Befestigungsvorrichtungen, insbesondere Befestigungsschrauben, Befestigungsbänder und/oder Befestigungsbolzen, welche ausgebildet sind, das Versteifungselement gegen das Brennstoffzellenelement zu pressen, und/oder das weitere Versteifungselement gegen die Elementunterseite des Brennstoffzellenelements zu pressen.

Dadurch wird der technische Vorteil erreicht, dass ein wirksames Anpressen des Versteifungselements gegen eine Elementoberseite des Brennstoffzellenelements und/oder ein wirksames Anpressen des weiteren Versteifungselements gegen eine Elementunterseite des Brennstoffzellenelements erreicht werden kann. Je nachdem ob das Versteifungselement alleine oder ob das Versteifungselement und das weitere Versteifungselement zusammen verwendet werden, kann das Brennstoffzellenelement einseitig oder beidseitig versteift werden.

Insbesondere umfasst die Brennstoffzellenvorrichtung gemäß der vorliegenden Anmeldung eine Mehrzahl von Befestigungsvorrichtungen, insbesondere Befestigungsschrauben, Befestigungsbänder und/oder Befestigungsbolzen, welche ausgebildet sind, das Verteilerelement mit einer Kraft zu beaufschlagen, wodurch das Versteifungselement, welches zwischen dem Verteilerelement und der Elementoberseite des Brennstoffzellenelements angeordnet ist, ebenfalls mit einer Kraft beaufschlagt wird und wirksam gegen die Elementoberseite des Brennstoffzellenelements angepresst wird.

Insbesondere umfasst die Brennstoffzellenvorrichtung gemäß der vorliegenden Anmeldung eine Mehrzahl von Befestigungsvorrichtungen, insbesondere Befestigungsschrauben, Befestigungsbänder und/oder Befestigungsbolzen, welche ausgebildet sind, das Verteilerelement und die Endplatte mit einer Kraft zu beaufschlagen, wodurch das Versteifungselement, welches zwischen dem Verteilerelement und der Elementoberseite des Brennstoffzellenelements angeordnet ist, ebenfalls mit einer Kraft beaufschlagt wird und wirksam gegen die Elementoberseite des Brennstoffzellenelements angepresst wird, und wodurch das weitere Versteifungselement, welches zwischen der Endplatte und dem Elementunterseite des Brennstoffzellenelements angeordnet ist, ebenfalls mit einer Kraft beaufschlagt wird und wirksam gegen die Elementunterseite des Brennstoffzellenelements angepresst wird. Somit wird eine wirksame beidseitige Versteifung des Brennstoffzellenelements, insbesondere des Brennstoffzellen-Stacks, sichergestellt.

In einer vorteilhaften Ausführungsform weisen das Verteilerelement, das Versteifungselement, das weitere Versteifungselement, das Brennstoffzellenelement und/oder die Endplatte eine Mehrzahl von Befestigungsöffnungen auf, welche jeweils fluchtend zueinander angeordnet sind, wobei die Befestigungsvorrichtungen jeweils einen Befestigungsschaft, insbesondere Schraubbolzen, aufweisen, welcher durch die jeweils fluchtend zueinander angeordneten Befestigungsöffnungen geführt ist, und wobei die Befestigungsvorrichtungen jeweils ein Befestigungselement, insbesondere Schraubmutter, aufweisen, welches endseitig an dem Befestigungsschaft angeordnet, insbesondere aufgeschraubt ist.

Dadurch wird der technische Vorteil erreicht, dass durch das Führen des Befestigungsschafts einer Befestigungsvorrichtung durch die jeweils fluchtend zueinander angeordneten Befestigungsöffnungen das Verteilerelement, das Versteifungselement, das weitere Versteifungselement und/oder die Endplatte wirksam zueinander positioniert werden können und anschließend durch das endseitige Anordnen, insbesondere Aufschrauben, des Befestigungselements an dem Befestigungsschaft, besonders wirksam die erforderliche Befestigungskraft durch die Befestigungsvorrichtung aufgebracht werden kann.

Umfasst die Brennstoffzellenvorrichtung insbesondere kein weiteres Versteifungselement und keine Endplatte, weisen insbesondere nur das Verteilerelement, das Versteifungselement und das Brennstoffzellenelement die Befestigungsöffnungen auf, um ein wirksames einseitiges Anpressen des Verteilerelements und des Versteifungselements an die Elementoberseite des Brennstoffzellenelements sicherzustellen.

Umfasst die Brennstoffzellenvorrichtung insbesondere ein weiteres Versteifungselement und eine Endplatte, weisen insbesondere das Verteilerelement, das Versteifungselement, das weitere Versteifungselement und die Endplatte die Befestigungsöffnungen auf, um ein wirksames beidseitiges Anpressen des Verteilerelements und des Versteifungselements an die Elementoberseite des Brennstoffzellenelements und der Endplatte und des weiteren Versteifungselements an die Elementunterseite des Brennstoffzellenelements sicherzustellen. Insbesondere weist in diesem Fall das Brennstoffzellenelement ebenfalls Befestigungsöffnungen auf, um die Befestigungsschäfte der Befestigungsvorrichtungen durch das Brennstoffzellenelement zu führen und somit die Befestigungsvorrichtungen insbesondere als Positionierungsöffnungen ausgebildet sind. Alternativ weist das Brennstoffzellenelement insbesondere keine Befestigungsöffnungen auf, so dass die Befestigungsschäfte der Befestigungsvorrichtungen an dem Brennstoffzellenelement vorbeigeführt werden. In dem alternativen Fall kann eine wirksame beidseitige Versteifung durch das Anpressen des Versteifungselements an die Elementoberseite des Brennstoffzellenelements und des weiteren Versteifungselements an die Elementunterseite des Brennstoffzellenelements durch die Befestigungsvorrichtungen sichergestellt werden, in dem das Brennstoffzellenelement zwischen dem Versteifungselement und dem weiteren Versteifungselement einklemmt wird.

Die Mehrzahl der Befestigungsöffnungen des Verteilerelements, des Versteifungselements, des weiteren Versteifungselements, des Brennstoffzellenelements und/oder der Endplatte umfasst insbesondere eine Mehrzahl von Befestigungsöffnungsgruppen, wobei jede Befestigungsöffnungsgruppe jeweils eine einzelne Befestigungsöffnung des Verteilerelements, des Versteifungselements, des weiteren Versteifungselements, des Brennstoffzellenelements und/oder der Endplatte umfasst, welche jeweils fluchtend zueinander angeordnet sind, und wobei jeweils einen einzelner Befestigungsschaft einer einzelnen Befestigungsvorrichtung durch eine Befestigungsöffnungsgruppe geführt ist. Insbesondere umfasst das Verteilerelement, das Versteifungselement, das weitere Versteifungselement, das Brennstoffzellenelement und/oder die Endplatte 4, 5, 6, 7, 8, 9, 10, 11, 12, 13, 14, 15, 16, 17, 18, 19 oder 20 Befestigungsöffnungsgruppen.

Insbesondere sind die Befestigungsöffnungen, insbesondere die Befestigungsöffnungsgruppen, an einem Rand des Verteilerelements, des Versteifungselements, des weiteren Versteifungselements, des Brennstoffzellenelements und/oder der Endplatte angeordnet.

Insbesondere sind die Befestigungsöffnungen, insbesondere die Befestigungsöffnungsgruppen, an allen Rändern des Verteilerelements, des Versteifungselements, des weiteren Versteifungselements, des Brennstoffzellenelements und/oder der Endplatte angeordnet.

In einer vorteilhaften Ausführungsform weisen die Befestigungsvorrichtungen jeweils ein Federelement auf, welches zwischen dem Befestigungsschaft, insbesondere Schraubbolzen, und dem Befestigungselement, insbesondere Schraubmutter, angeordnet ist, um eine konstante Presskraft bereitzustellen.

Dadurch wird der technische Vorteil erreicht, dass die Federelemente der Befestigungsvorrichtungen eine besonders gleichmäßig verteilte auf das Versteifungselement und/oder das weitere Versteifungselement wirkende Presskraft bereitstellen. Insbesondere wird das jeweilige Federelement endseitig auf den jeweiligen Befestigungsschaft aufgeschoben und liegt an dem Verteilerelement und/oder an der Endplatte an. Anschließend wird das Befestigungselement endseitig auf den jeweiligen Befestigungsschaft angeordnet, insbesondere aufgeschraubt, um das Federelement an dem Verteilerelement und/oder an der Endplatte festzulegen und um eine konstante Presskraft bereitzustellen.

In einer vorteilhaften Ausführungsform weisen die Befestigungsvorrichtungen jeweils einen auf dem Verteilerelement und/oder auf der Endplatte aufliegenden Befestigungskopf, insbesondere Schraubkopf, auf, wobei insbesondere eine auf den Befestigungsschaft gesteckte Unterlegscheibe zwischen dem Befestigungskopf, insbesondere Schraubkopf, und dem Verteilerelement und/oder der Endplatte angeordnet ist.

Dadurch wird der technische Vorteil erreicht, dass der Befestigungskopf der jeweiligen Befestigungsvorrichtung sicherstellt, dass die Befestigungsvorrichtung beim Festziehen nicht durch das Verteilerelement und/oder durch die Endplatte durchrutscht. Hierbei stellt die Unterlegscheibe, welche insbesondere zwischen dem Befestigungskopf und dem Verteilerelement, und/oder zwischen dem Befestigungskopf und der Endplatte angeordnet ist, sicher, dass die wirkenden Kräfte möglichst großflächig in das Verteilerelement und/ die Endplatte eingeleitet werden.

In einer vorteilhaften Ausführungsform weisen das Versteifungselement und/oder das weitere Versteifungselement jeweils eine ebene an dem Brennstoffzellenelement, insbesondere an der Elementoberseite und/oder Elementunterseite, anliegende Pressfläche auf, insbesondere ebene Pressfläche, auf, um mit einer gleichmäßigen Presskraft an das Brennstoffzellenelement, insbesondere an die Elementoberseite und/oder Elementunterseite, angepresst zu werden.

Dadurch wird der technische Vorteil erreicht, dass durch die Pressfläche, insbesondere ebene Pressfläche, des Versteifungselements und/oder des weiteren Versteifungselements eine besonders wirksame Krafteinleitung auf das Brennstoffzellenelement sichergestellt werden kann.

In einer vorteilhaften Ausführungsform weist die Brennstoffzellenvorrichtung eine Mehrzahl von elektrischen Isolationselementen, insbesondere elektrische Isolationsbuchsen, auf, welche zumindest abschnittsweise in den Befestigungsöffnungen angeordnet sind.

Dadurch wird der technische Vorteil erreicht, dass ein elektrischer Kurzschluss vermieden werden kann. Da die durch die Befestigungsöffnungen geführten Befestigungsvorrichtungen, insbesondere Befestigungsschrauben, Befestigungsbänder und/oder Befestigungsbolzen, insbesondere aus einem elektrisch leitenden Metall bestehen, kann bei einem Kontakt der Befestigungsvorrichtungen mit einem elektrisch leitenden Bereich der Brennstoffzellenvorrichtung ein Kurzschluss entstehen.

Das Auftreten eines Kurzschlusses kann durch das Anordnen der elektrischen Isolationselemente, insbesondere elektrische Isolationsbuchsen, in den Befestigungsöffnungen verhindert werden, da ein elektrisch leitender Kontakt zwischen den Befestigungsvorrichtungen und den die Befestigungsöffnungen begrenzenden Rändern durch die Isolationselemente verhindert werden kann.

Insbesondere sind die elektrischen Isolationselemente zumindest abschnittsweise in den Befestigungsöffnungen des Verteilerelements, des Versteifungselements, des Brennstoffzellenelements, des weiteren Versteifungselements und/oder der Endplatte angeordnet.

Insbesondere sind die elektrischen Isolationselemente zumindest abschnittsweise in den Befestigungsöffnungen des Verteilerelements und/oder der Endplatte angeordnet und sind die elektrischen Isolationselemente zumindest abschnittsweise durch die Befestigungsöffnungen des Versteifungselements und/oder durch die Befestigungsöffnungen des weiteren Versteifungselements geführt.

Insbesondere bestehen die elektrischen Isolationselemente, insbesondere elektrische Isolationsbuchsen, aus einem elektrisch nichtleitenden Material, insbesondere Kunststoff, insbesondere Polyphenolsulfid (PPS).

In einer vorteilhaften Ausführungsform sind die elektrischen Isolationselemente, insbesondere elektrische Isolationsbuchsen, vollständig in den in dem elektrisch leitenden Bereich des Versteifungselements angeordneten Befestigungsöffnungen angeordnet, und/oder sind die elektrischen Isolationselemente, insbesondere elektrische Isolationsbuchsen, vollständig in den in dem weiteren elektrisch leitenden Bereich des weiteren Versteifungselements angeordneten Befestigungsöffnungen angeordnet.

Dadurch wird der technische Vorteil erreicht, dass die elektrischen Isolationselemente den elektrischen leitenden Bereich des Versteifungselements und den weiteren elektrisch leitenden Bereich des weiteren Versteifungselements vollständig von den Befestigungsvorrichtungen elektrisch isolieren.

In einer vorteilhaften Ausführungsform wird jeweils ein elektrisches Isolationselement, insbesondere elektrische Isolationsbuchse, durch eine auf dem Verteilerelement und/oder auf der Endplatte aufliegende Unterlegscheibe fixiert, wobei die Unterlegscheibe insbesondere zwischen einem Befestigungskopf der Befestigungsvorrichtung und dem Isolationselement angeordnet ist.

Dadurch wird der technische Vorteil erreicht, dass die Unterlegscheibe eine vorteilhafte Fixierung des elektrischen Isolationselements, insbesondere elektrische Isolationsbuchse, sicherstellt.

In einer vorteilhaften Ausführungsform liegt jeweils ein elektrisches Isolationselement, insbesondere elektrische Isolationsbuchse, an einer der Befestigungsvorrichtung abgewandten Seite an einem Kunststoffelement, insbesondere Kunststoffhülse an, wobei das Kunststoffelement insbesondere zwischen der Unterlegschiebe und dem elektrisch leitenden Bereich des Versteifungselements und/oder dem weiteren elektrisch leitenden Bereich des weiteren Versteifungselements angeordnet ist.

Dadurch wird der technische Vorteil erreicht, dass das jeweilige Kunststoffelement, insbesondere Kunststoffhülse eine wirksame Stabilisierung des elektrischen Isolationselements, insbesondere elektrische Isolationsbuchse, innerhalb der jeweiligen Befestigungsöffnung sicherstellt. Insbesondere umfasst das jeweilige Kunststoffelement, insbesondere Kunststoffhülse, Polyphenolsulfid (PPS).

In einer vorteilhaften Ausführungsform weist der fluidführende Bereich des Versteifungselements einen Fluidzuführungsbereich mit Fluidzuführungsöffnungen zum Zuführen von Brennstoff, Oxidationsmittel und/oder Kühlmittel und einen Fluidabführungsbereich mit Fluidabführungsöffnungen zum Abführen von Brennstoff, Oxidationsmittel, Reaktionsprodukt und/oder Kühlmittel auf, wobei der Fluidzuführungsbereich beabstandet von dem Fluidzuführungsbereich in dem Versteifungselement angeordnet ist, wobei insbesondere der elektrisch leitende Bereich zwischen dem Fluidzuführungsbereich und dem Fluidabführungsbereich angeordnet ist.

Dadurch wird der technische Vorteil erreicht, dass durch die Beabstandung des Fluidzuführungsbereichs und des Fluidabführungsbereichs die entsprechenden Fluidzuführungsöffnungen und die entsprechenden Fluidabführungsöffnungen auch beabstandet an dem Brennstoffzellenelement anliegen, und damit mit unterschiedlichen Bereichen des Brennstoffzellenelements, insbesondere einem Fluidzuführungskanal und einem Fluidabführungskanal, fluidtechnisch gekoppelt sind, um ein wirksames Zuführen von Fluid in das Brennstoffzellenelement und um ein wirksames Abführen von Fluid aus dem Brennstoffzellenelement zu ermöglichen.

Insbesondere ist der Fluidzuführungsbereich an einem ersten Ende des Versteifungselements angeordnet und ist der Fluidabführungsbereich an einem dem ersten Ende gegenüberliegenden zweiten Ende des Versteifungselements angeordnet, wobei der elektrisch leitende Bereich insbesondere zwischen dem Fluidzuführungsbereich und dem Fluidabführungsbereich angeordnet ist. Somit wird eine wirksame strukturelle Trennung zwischen dem elektrisch leitenden Bereich, dem Fluidzuführungsbereich und dem Fluidabführungsbereich sichergestellt.

Insbesondere ist der fluidführende Bereich, insbesondere der Fluidzuführungsbereich und der Fluidabführungsbereich an einem Rand des Versteifungselements angeordnet, wobei der elektrisch leitende Bereich insbesondere in der Mitte des Versteifungselements angeordnet ist.

Gemäß einer vorteilhaften Ausführungsform weist der Fluidzuführungsbereich jeweils zumindest zwei fluidtechnisch getrennte Fluidzuführungsöffnungen zum fluidtechnisch getrennten Zuführen von Brennstoff, Oxidationsmittel und/oder Kühlmittel, insbesondere drei fluidtechnisch getrennte Fluidzuführungsöffnungen, auf, und/oder weist der Fluidabführungsbereich jeweils zumindest zwei fluidtechnisch getrennte Fluidabführungsöffnungen zum fluidtechnisch getrennten Abführen von Brennstoff, Oxidationsmittel, Reaktionsprodukt und/oder Kühlmittel, insbesondere drei fluidtechnisch getrennte Fluidabführungsöffnungen, auf.

Dadurch wird der technische Vorteil erreicht, dass durch die fluidtechnische Trennung der zumindest zwei, insbesondere drei, Fluidzuführungsöffnungen und Fluidabführungsöffnungen, vorteilhaft verhindert werden kann, dass sich der Brennstoff und das Oxidationsmittel vor der chemischen Reaktion innerhalb des Brennstoffzellenelements mischt, bzw. wird sichergestellt, dass das insbesondere verwendete Kühlmittel von dem Brennstoff, Oxidationsmittel und Reaktionsprodukt fluidtechnisch separiert durch das Brennstoffzellenelement geführt werden kann.

Insbesondere weisen die Fluidzuführungsöffnungen und/oder Fluidabführungsöffnungen einen mehreckigen und/oder runden Querschnitt auf.

Gemäß einer vorteilhaften Ausführungsform umfassen die Fluidzuführungsöffnungen des Fluidzuführungsbereichs eine Brennstoffzuführungsöffnung zum Zuführen des Brennstoffs, insbesondere Wasserstoff, eine Oxidationsmittelzuführungsöffnung zum Zuführen des Oxidationsmittels, insbesondere Sauerstoff, und eine Kühlmittelzuführungsöffnung zum Zuführen des Kühlmittels, insbesondere Kühlwasser, und/oder umfassen die Fluidabführungsöffnungen des Fluidabführungsbereichs eine Brennstoffabführungsöffnung zum Abführen des Brennstoffs, insbesondere Wasserstoff, eine Oxidationsmittelabführungsöffnung zum Abführen des Oxidationsmittels, insbesondere Sauerstoff, und eine Kühlmittelabführungsöffnung zum Abführen des Kühlmittels, insbesondere Kühlwasser.

Dadurch wird der technische Vorteil erreicht, dass Brennstoff, insbesondere Wasserstoff, Oxidationsmittel, insbesondere Sauerstoff, und das Kühlmittel, insbesondere Kühlwasser, fluidtechnisch separat zu dem Brennstoffzellenelement zugeführt und von dem Brennstoffzellenelement abgeführt werden können.

Das durch die chemische Reaktion des Brennstoffs mit dem Oxidationsmittel in dem Brennstoffzellenelement entstehende Reaktionsprodukt, insbesondere Wasser, kann insbesondere durch die Oxidationsmittelabführungsöffnung und/oder durch die Brennstoffabführungsöffnung durch die Fluidabführung des Verteilerelements abgeführt werden, und das Reaktionsprodukt kann insbesondere anschließend von dem Oxidationsmittel und/oder dem Brennstoff getrennt werden.

Insbesondere weisen die Brennstoffzuführungsöffnung und die Brennstoffabführungsöffnung den gleichen Querschnitt auf. Insbesondere weisen die Oxidationsmittelzuführungsöffnung und die Oxidationsmittelabführungsöffnung den gleichen Querschnitt auf. Insbesondere weisen die Kühlmittelzuführungsöffnung und die Kühlmittelabführungsöffnung den gleichen Querschnitt auf.

Insbesondere weisen die Oxidationsmittelzuführungsöffnung, und/oder der Oxidationsmittelabführungsöffnung einen Querschnitt auf, welcher größer ist als der Querschnitt der Brennstoffzuführungsöffnung, der Brennstoffabführungsöffnung, der Kühlmittelzuführungsöffnung, und/oder der Kühlmittelabführungsöffnung.

Dadurch wird der technische Vorteil erreicht, dass durch den größeren Querschnitt der Oxidationsmittelzuführungsöffnung und der Oxidationsmittelabführungsöffnung gegenüber dem Querschnitt der Brennstoffzuführungsöffnung, der Brennstoffabführungsöffnung, der Kühlmittelzuführungsöffnung, und/oder der Kühlmittelabführungsöffnung ein besonders hoher Volumenstrom von Oxidationsmittel durch das Brennstoffzellenelement geführt werden kann, um eine wirksame Wärmeabfuhr bereitzustellen.

Gemäß einer vorteilhaften Ausführungsform weisen der elektrisch leitende Bereich des Versteifungselements und/oder der weitere elektrisch leitende Bereich des weiteren Versteifungselements jeweils einen Abführkontakt und/oder einen weiteren Abführkontakt auf, welcher mit einem externen Stromleiter verbindbar ist, um die von dem Brennstoffzellenelement bereitgestellte elektrische Energie von der Brennstoffzellenvorrichtung abzuführen, wobei der Abführkontakt und/oder der weitere Abführkontakt insbesondere als eine Kontaktlasche oder als ein Kontaktpin, insbesondere eine gebogene Kontaktlasche oder ein geschweißter Kontaktpin, ausgebildet ist.

Dadurch wird der technische Vorteil erreicht, dass der jeweilige Abführkontakt, insbesondere Kontaktlasche oder Kontaktpin, einen vorteilhaften Anschluss eines externen Stromleiters ermöglicht. Insbesondere ist der jeweilige Abführkontakt, insbesondere Kontaktlasche oder Kontaktpin, an einem Rand des Versteifungselements und/oder des weiteren Versteifungselements angeordnet.

Gemäß einer vorteilhaften Ausführungsform ist der elektrisch leitende Bereich des Versteifungselements mit einem elektrisch leitenden Kontaktelement, insbesondere Pluspol, an einer Elementoberseite des Brennstoffzellenelements, elektrisch leitend verbunden, und/oder ist der weitere elektrisch leitende Bereich des weiteren Versteifungselements mit einem weiteren elektrisch leitenden Kontaktelement, insbesondere Minuspol, an einer Elementunterseite des Brennstoffzellenelements verbunden.

Dadurch wird der technische Vorteil erreicht, dass eine wirksame elektrisch leitende Verbindung zwischen dem jeweiligen elektrisch leitenden Bereich des jeweiligen Versteifungselements und der jeweiligen Elementoberseite, bzw. Elementunterseite des Brennstoffzellenelements bereitgestellt werden kann.

Gemäß einer vorteilhaften Ausführungsform umfasst der elektrisch leitende Bereich des Versteifungselements und/oder der weitere elektrisch leitende Bereich des weiteren Versteifungselements eine elektrisch leitende Beschichtung, insbesondere eine partielle Plattierung, ein Einwalzen oder ein Eingießen mit einem elektrisch leitenden Metall, insbesondere Kupfer.

Dadurch wird der technische Vorteil erreicht, dass durch das Einbringen der elektrisch leitenden Beschichtung, insbesondere partielle Plattierung, Einwalzen oder Eingießen, aus einem elektrisch leitenden Metall einfach und vorteilhaft der elektrisch leitende Bereich des Versteifungselements und/oder der weitere elektrisch leitende Bereich des weiteren Versteifungselements bereitgestellt werden können.

Ausführungsbeispiele der Erfindung sind in den Zeichnungen dargestellt und werden im Folgenden näher beschrieben.

Es zeigen:
- Fig. 1: eine perspektivische Ansicht einer Brennstoffzellenvorrichtung in einer Explosionsdarstellung gemäß einer Ausführungsform der vorliegenden Anmeldung;
- Fig. 2: eine perspektivische Ansicht der in Fig. 1 dargestellten Brennstoffzellenvorrichtung in einer Kompaktdarstellung;
- Fig. 3: eine perspektivische Ansicht eines Versteifungselements der in Fig. 1 dargestellten Brennstoffzellenvorrichtung;
- Fig. 4: eine perspektivische Ansicht eines weiteren Versteifungselements der in Fig. 1 dargestellten Brennstoffzellenvorrichtung;
- Fig. 5: eine perspektivische Ansicht eines Versteifungselements gemäß einer weiteren Ausführungsform der vorliegenden Anmeldung;
- Fig. 6: eine perspektivische Ansicht eines weiteren Versteifungselements gemäß einer weiteren Ausführungsform der vorliegenden Anmeldung; und
- Fig. 7: eine schematische Ansicht einer Befestigungsvorrichtung in einer Brennstoffzellenvorrichtung gemäß einer weiteren Ausführungsform der vorliegenden Anmeldung.

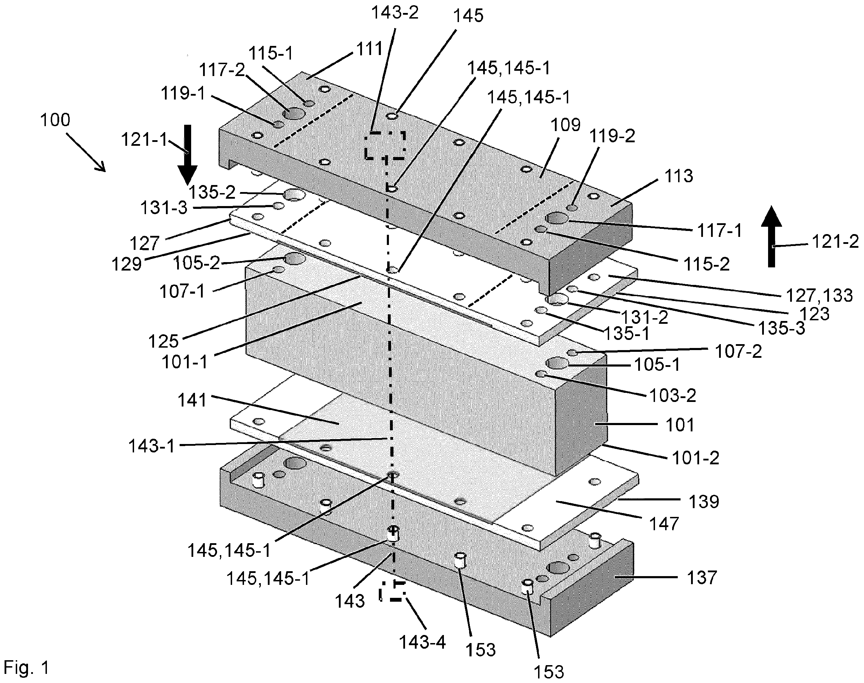

Fig. 1 zeigt eine perspektivische Ansicht einer Brennstoffzellenvorrichtung in einer Explosionsdarstellung gemäß einer Ausführungsform der vorliegenden Anmeldung. In einer Vielzahl von industriellen Anwendungen, insbesondere in elektrisch betriebenen Fahrzeugen, werden oftmals Brennstoffzellenelemente eingesetzt, um elektrische Energie bereitzustellen. Ein Brennstoffzellenelement gemäß der vorliegenden Anmeldung ist eine galvanische Zelle, welche ausgebildet ist, die durch eine chemische Reaktion des Brennstoffs mit dem Oxidationsmittel freigesetzte chemische Energie in elektrische Energie umzuwandeln. Dadurch, dass der Brennstoff und das Oxidationsmittel dem Brennstoffzellenelement kontinuierlich zugeführt werden, kann das Brennstoffzellenelement kontinuierlich elektrische Energie bereitstellen.

Ein Brennstoffzellenelement gemäß der vorliegenden Anmeldung kann eine Wasserstoff-Sauerstoff-Brennstoffzelle umfassen, bei der als Brennstoff Wasserstoff und bei der als Oxidationsmittel Sauerstoff verwendet werden. Ein Brennstoffzellenelement gemäß der vorliegenden Anmeldung kann auch andere Brennstoffzellenelemente umfassen bei der statt Wasserstoff auch andere Brennstoffe, wie insbesondere Methanol, Butan und/oder Erdgas genutzt werden können.

Ein Brennstoffzellenelement gemäß der vorliegenden Anmeldung umfasst insbesondere eine Mehrzahl von einzelnen Brennstoffzellen, welche, insbesondere übereinander, in dem Brennstoffzellenelement angeordnet sind, um eine vorteilhafte elektrische Energiemenge, insbesondere eine hohe Spannung, bereitzustellen. Ein entsprechendes Brennstoffzellenelement mit einer Mehrzahl von einzelnen Brennstoffzellen, welche, insbesondere übereinander, in dem Brennstoffzellenelement angeordnet sind, wird auch als ein Brennstoffzellen-Stack bezeichnet. Insbesondere kann das Brennstoffelement gemäß der vorliegenden Anmeldung 50 oder mehr einzelne übereinander angeordnete Brennstoffzellen umfassen.

Eine einzelne Brennstoffzelle des Brennstoffzellenelements umfasst hierbei insbesondere Elektroden, welche durch einen Elektrolyten, insbesondere eine semipermeable Membran, voneinander getrennt sind, um eine lonenleitung zu ermöglichen, und um sicherzustellen, dass kontinuierlich elektrische Energie bereitgestellt werden kann.

Eine herkömmliche Brennstoffzellenvorrichtung umfasst neben einem Brennstoffzellenelement auch noch einen oder mehrere Stromabnehmer, um die von dem Brennstoffzellenelement bereitgestellte elektrische Energie von dem Brennstoffzellenelement abzuführen, und diese einem elektrischen Verbraucher, insbesondere einem Elektromotor eines elektrisch betreibbaren Fahrzeugs, zuzuführen.

Eine herkömmliche Brennstoffzellenvorrichtung umfasst ferner eine Fluidzuführung zum Zuführen des Brennstoffs und des Oxidationsmittels zu dem Brennstoffzellenelement, und eine Fluidabführung zum Abführen des Brennstoffs, des Oxidationsmittels und des durch die chemische Reaktion des Brennstoffs mit dem Oxidationsmittel entstehenden Reaktionsproduktes von dem Brennstoffzellenelement.

Der Brennstoff und das Oxidationsmittel werden hierbei durch die Fluidzuführung separat dem Brennstoffzellenelement zugeführt, um innerhalb des Brennstoffzellenelements die chemische Reaktion des Brennstoffs, insbesondere Wasserstoff, und des Oxidationsmittels, insbesondere Sauerstoff, zu ermöglichen und dadurch die elektrische Energie bereitzustellen. Durch die chemische Reaktion des Brennstoffs, insbesondere Wasserstoff, und des Oxidationsmittels, insbesondere Sauerstoff, entsteht Reaktionsprodukt, insbesondere Wasser, welches bei der in dem Brennstoffzellenelement vorhandenen erhöhten Temperatur als gasförmiger Wasserdampf-Reaktionsprodukt vorliegt, wobei das Wasserdampf-Reaktionsprodukt neben dem nicht reagierten Brennstoff, und dem nicht reagierten Sauerstoff insbesondere durch die Fluidabführung aus dem Brennstoffzellenelement abgeführt wird.

Um sicherzustellen, dass kein Brennstoff, Sauerstoff und/oder Reaktionsprodukt bei der Fluidzuführung und/oder Fluidabführung aus der Brennstoffzellenvorrichtung austreten kann, werden hohe Anforderungen an die Fluiddichtigkeit der entsprechenden fluidtechnischen Verbindungen zwischen Fluidzuführung und Brennstoffzellenelement und zwischen dem Brennstoffzellenelement und der Fluidabführung gestellt.

Somit kann durch eine kontinuierliche Zuführung von Brennstoff und Oxidationsmittel, sowie eine kontinuierliche Abführung von Brennstoff, Oxidationsmittel und Reaktionsprodukt, eine kontinuierliche chemische Reaktion innerhalb des Brennstoffzellenelements aufrechterhalten werden, und dementsprechend kann durch das Brennstoffzellenelement kontinuierlich elektrische Energie bereitgestellt werden.

Aufgrund der oftmals hohen Wärmeentwicklung während der chemischen Reaktion zwischen dem Brennstoff und dem Oxidationsmittel kann es in Brennstoffzellenvorrichtungen notwendig sein, die entstehende Wärme aus dem Brennstoffzellenelement abzuführen. Hierbei kann beispielsweise durch die Fluidzuführung ein Kühlmittel dem Brennstoffzellenelement zugeführt werden, um die entstehende Wärme aufzunehmen, und das erwärmte Kühlmittel kann anschließend durch die Fluidabführung abgeführt werden, um die entstehende Wärme aus dem Brennstoffzellenelement abzuführen.

Die Brennstoffzellenvorrichtung 100 gemäß dem in Fig. 1 dargestellten Ausführungsbeispiel umfasst ein Brennstoffzellenelement 101 zum Bereitstellen von elektrischer Energie durch die Oxidation eines Brennstoffs, insbesondere Wasserstoff, mit einem Oxidationsmittel, insbesondere Sauerstoff.

Das in Fig. 1 lediglich schematisch dargestellte Brennstoffzellenelement 101 ist insbesondere als ein Brennstoffzellen-Stack ausgebildet, welcher eine Mehrzahl von einzelnen übereinander angeordneten Brennstoffzellen umfasst, die mit einer hohen Kraft, insbesondere zwischen 20 kN bis 30 kN, innerhalb der Brennstoffzellenvorrichtung 100 aneinander gepresst werden, um ein stabiles Brennstoffzellenelement 101 bereitzustellen und um ein Austreten von Brennstoff, Oxidationsmittel und/oder Reaktionsprodukt zu verhindern.

Insbesondere umfasst das in Fig. 1 dargestellte Brennstoffzellenelement 101 ein Polymerelektrolyt-Membran-Brennstoffzellenelement 101 (PEMFC), welches mit Wasserstoff als Brennstoff und Sauerstoff als Oxidationsmittel betrieben wird, und wobei die einzelnen Brennstoffzellen eine Mehrzahl von Bipolarplatten umfassen.

Das in Fig. 1 dargestellte Brennstoffzellenelement 101 weist einen Brennstoffzuführungskanal 103-1 zum Zuführen des Brennstoffs, insbesondere Wasserstoff, sowie einen Brennstoffabführungskanal 103-2 zum Abführen des nicht reagierten Brennstoffs, insbesondere Wasserstoff, auf. Aufgrund der in Fig. 1 gewählten Darstellung ist der Brennstoffzuführungskanal 103-1 in der Fig. 1 nicht einsehbar.

Das in Fig. 1 dargestellte Brennstoffzellenelement 101 weist einen Oxidationsmittelzuführungskanal 105-1 zum Zuführen des Oxidationsmittels, insbesondere Sauerstoff, sowie einen Oxidationsmittelabführungskanal 105-2 zum Abführen des nicht reagierten Oxidationsmittels, insbesondere Sauerstoff, auf.

Durch die chemische Reaktion in dem Brennstoffzellenelement 101 entstehendes Reaktionsprodukt kann durch den Brennstoffabführungskanal 103-2 und/oder durch den Oxidationsmittelabführungskanal 105-2 aus dem Brennstoffzellenelement 101 abgeführt werden.

Das in Fig. 1 dargestellte Brennstoffzellenelement 101 weist einen Kühlmittelzuführungskanal 107-1 zum Zuführen des Kühlmittels, insbesondere Kühlwasser, sowie einen Kühlmittelabführungskanal 107-2 zum Abführen des Kühlmittels, insbesondere Kühlwasser, auf.

Die Brennstoffzellenvorrichtung 100 gemäß dem in Fig. 1 dargestellten Ausführungsbeispiel umfasst ferner ein Verteilerelement 109, insbesondere eine Verteilerplatte, welches eine in Fig. 1 lediglich schematisch dargestellte Fluidzuführung 111 zum Zuführen von Brennstoff und Oxidationsmittel zu dem Brennstoffzellenelement 101 und eine in Fig. 1 lediglich schematisch dargestellte Fluidabführung 113 zum Abführen von Brennstoff, Oxidationsmittel und Reaktionsprodukt von dem Brennstoffzellenelement 101 aufweist.

Die Fluidzuführung 111 weist eine Brennstoffzuführung 115-1 zum Zuführen des Brennstoffs, insbesondere Wasserstoff, einen Oxidationsmittelzuführung 117-1 zum Zuführen des Oxidationsmittels, insbesondere Sauerstoff, sowie eine Kühlmittelzuführung 119-1 zum Zuführen des Kühlmittels, insbesondere Wasser, auf.

Die Fluidabführung 113 weist eine Brennstoffabführung 115-2 zum Abführen des Brennstoffs, insbesondere Wasserstoff, eine Oxidationsmittelabführung 117-2 zum Abführen des nicht reagierten Oxidationsmittels, insbesondere Sauerstoff, sowie eine Kühlmittelabführung 119-2 zum Abführen des Kühlmittels, insbesondere Wasser, auf.

Die Fluidzuführungsrichtung 121-1 der durch die Fluidzuführung 111 zugeführten Fluide und die Fluidabführungsrichtung 121-2 der durch die Fluidabführung 113 abgeführten Fluide sind in Fig. 1 nur schematisch dargestellt.

Die Brennstoffzellenvorrichtung 100 gemäß dem in Fig. 1 dargestellten Ausführungsbeispiel umfasst ferner ein Versteifungselement 123, insbesondere Versteifungsplatte, welches zwischen dem Verteilerelement 109 und dem Brennstoffzellenelement 101 angeordnet ist. Hierbei ist das Versteifungselement 123 gegen das Brennstoffzellenelement 101 anpressbar, um das Brennstoffelement 101 zu versteifen. Insbesondere wird das Verteilerelement 109 gegen das Versteifungselement 123 gepresst, wodurch das Versteifungselement 123 gegen eine Elementoberseite 101-1 des Brennstoffzellenelements 101 gepresst wird.

Das Anpressen des Versteifungselements 123 gegen das Brennstoffzellenelement 101 kann durch eine Mehrzahl von in Fig. 1 nur schematisch dargestellten Befestigungsvorrichtungen, insbesondere Befestigungsschrauben, Befestigungsbänder und/oder Befestigungsbolzen, erreicht werden, welche insbesondere eine hohe Anpresskraft, insbesondere zwischen 20 kN bis 30 kN, bereitstellen, so dass die einzelnen übereinander angeordneten Brennstoffzellen des Brennstoffzellenelements 101 wirksam aneinander gepresst werden.

Somit kann das Versteifungselement 123 das Brennstoffzellenelement 101 vorteilhaft strukturell versteifen und eine mechanische Stabilität des Brennstoffzellenelements 101 sicherstellen.

Das Versteifungselement 123 weist ferner einen elektrisch leitenden Bereich 125 auf, welcher mit dem Brennstoffzellenelement 101, insbesondere mit der Elementoberseite 101-1, elektrisch leitend verbunden und ausgebildet ist, von dem Brennstoffzellenelement 101 bereitgestellte elektrische Energie abzuführen. Somit fungiert der elektrisch leitende Bereich 125 des Versteifungselements 123 als ein Stromabnehmer für das Brennstoffzellenelement 101. Für die genaue Ausbildung des elektrisch leitenden Bereichs 125 wird auf die nachfolgenden Figuren der vorliegenden Anmeldung verwiesen.

Das Versteifungselement 123 weist ferner einen fluidführenden Bereich 127 auf, welcher mit der Fluidzuführung 111 und Fluidabführung 113 des Verteilerelements 109 und welcher mit dem Brennstoffzellenelement 101 fluidtechnisch verbunden ist. Hierbei sind der elektrisch leitende Bereich 125 und der fluidführende Bereich 127 integral in dem Versteifungselement 123 gebildet.

Der fluidführende Bereich 127 des Versteifungselements 123 weist einen Fluidzuführungsbereich 129 mit Fluidzuführungsöffnungen 131 zum Zuführen von Brennstoff, Oxidationsmittel und Kühlmittel auf. Der fluidführende Bereich 127 des Versteifungselements 123 weist einen Fluidabführungsbereich 133 mit Fluidabführungsöffnungen 135 zum Abführen von Brennstoff, Oxidationsmittel und Kühlmittel auf. Wie aus der Fig. 1 ersichtlich ist, ist der Fluidzuführungsbereich 129 von dem Fluidabführungsbereich 133 beabstandet in dem Versteifungselement 123 angeordnet.

Die Fluidzuführungsöffnungen 131 des Fluidzuführungsbereichs 129 umfassen eine Brennstoffzuführungsöffnung 131-1 zum Zuführen des Brennstoffs, insbesondere Wasserstoff, eine Oxidationsmittelzuführungsöffnung 131-2 zum Zuführen des Oxidationsmittels, insbesondere Sauerstoff, und eine Kühlmittelzuführungsöffnung 131-3 zum Zuführen des Kühlmittels, insbesondere Wasser, auf. Aufgrund der Darstellungsperspektive ist die Brennstoffzuführungsöffnung 131-1 in der Fig. 1 nicht dargestellt.

Die Fluidabführungsöffnungen 135 des Fluidabführungsbereichs 133 umfassen eine Brennstoffabführungsöffnung 135-1 zum Abführen des Brennstoffs, insbesondere Wasserstoff, eine Oxidationsmittelabführungsöffnung 135-2 zum Abführen des Oxidationsmittels, insbesondere Sauerstoff, sowie eine Kühlmittelabführungsöffnung 135-3 zum Abführen des Kühlmittels, insbesondere Wasser, auf.

Somit stellt der fluidführende Bereich 127, insbesondere Fluidzuführungsbereich 129, des Versteifungselements 123 sicher, dass Brennstoff, Oxidationsmittel und Kühlmittel von der Fluidzuführung 111 des Verteilerelements 109 jeweils durch die Brennstoffzuführungsöffnung 131-1, Oxidationsmittelzuführungsöffnung 131-2 und Kühlmittelzuführungsöffnung 131-3 des Fluidzuführungsbereichs 129 dem jeweiligen Brennstoffzuführungskanal 103-1, Oxidationsmittelzuführungskanal 105-1 und Kühlmittelzuführungskanal 107-1 des Brennstoffzellenelements 101 zugeführt werden, um Brennstoff, Oxidationsmittel und Kühlmittel dem Brennstoffzellenelement 101 zuzuführen.

Somit stellt der fluidführende Bereich 127, insbesondere Fluidabführungsbereich 133, des Versteifungselements 123 sicher, dass Brennstoff, Oxidationsmittel, Reaktionsprodukt und Kühlmittel von dem Brennstoffabführungskanal 103-2, Oxidationsmittelabführungskanal 105-2 und Kühlmittelabführungskanal 107-2 des Brennstoffzellenelements 101 jeweils durch die Brennstoffabführungsöffnung 135-1, Oxidationsmittelabführungsöffnung 135-2 und Kühlmittelabführungsöffnung 135-3 des Fluidabführungsbereichs 133 und durch die Fluidabführung 113 des Verteilerelements 109 abgeführt werden können, um Brennstoff, Oxidationsmittel, Reaktionsprodukt und Kühlmittel von dem Brennstoffzellenelement 101 abzuführen.

Somit stellt das Versteifungselement 123 der Brennstoffzellenvorrichtung 100 gemäß dem in Fig. 1 der vorliegenden Anmeldung dargestellten Ausführungsbeispiel drei Funktionalitäten in einem Bauteil bereit.

Erstens bewirkt das Versteifungselement 123 durch die Anpressbarkeit an das Brennstoffzellenelement 101 eine wirksame Versteifung und damit vorteilhafte mechanische Stabilisierung des Brennstoffzellenelements 101.

Zweitens bewirkt das Versteifungselement 123 durch den elektrisch leitenden Bereich 125, welcher mit dem Brennstoffzellenelement 101, elektrisch leitend verbunden ist, eine wirksame Abführung von elektrischer Energie von dem Brennstoffzellenelement 101.

Drittens bewirkt das Versteifungselement 123 durch den fluidführenden Bereich 127, insbesondere Fluidzuführungsbereich 129 und Fluidabführungsbereich 133, eine wirksame fluidtechnische und fluiddichte Verbindung zwischen dem Verteilerelement 109 und dem Brennstoffzellenelement 101.

Somit können die drei unterschiedlichen Funktionalitäten gemäß dem vorliegenden Ausführungsbeispiel in dem Versteifungselement 123 vereinigt werden, wodurch sich die Komplexität des Aufbaus und damit auch die Herstellungskosten der Brennstoffzellenvorrichtung 100 reduzieren.

Für weitere Details in Bezug auf das Versteifungselement 123 wird auf die nachfolgenden Figuren verwiesen.

Die Brennstoffzellenvorrichtung 100 gemäß dem in Fig. 1 dargestellten Ausführungsbeispiel umfasst ferner eine Endplatte 137 und ein weiteres Versteifungselement 139, welches zwischen der Endplatte 137 und einer Elementunterseite 101-2 des Brennstoffzellenelements 101 angeordnet ist.

Das weitere Versteifungselement 139 weist einen weiteren elektrisch leitenden Bereich 141 auf, welcher mit dem Brennstoffzellenelement 101, insbesondere mit der Elementunterseite 101-2, elektrisch leitend verbunden und ausgebildet ist, von dem Brennstoffzellenelement 101 bereitgestellte elektrische Energie abzuführen.

Insbesondere ist der elektrisch leitende Bereich 125 des Versteifungselements 123 mit einem in Fig. 1 nicht dargestellten elektrisch leitenden Kontaktelement, insbesondere Pluspol, an der Elementoberseite 101-1 des Brennstoffzellenelements 101, elektrisch leitend verbunden. Insbesondere ist der weitere elektrisch leitende Bereich 141 des weiteren Versteifungselements 139 mit einem in Fig. 1 nicht dargestellten weiteren elektrisch leitenden Kontaktelement, insbesondere Minuspol, an der Elementunterseite 101-2 des Brennstoffzellenelements 101 verbunden.

Hierbei wird betont, dass das weitere Versteifungselement 139 insbesondere keinen fluidführenden Bereich aufweist, sondern fluiddicht mit der Elementunterseite 101-2 des Brennstoffzellenelements 101 abschließt. Somit wird durch das fluiddicht mit der Elementunterseite 101-2 des Brennstoffzellenelements 101 abschließende weitere Versteifungselement 139 sichergestellt, dass durch die Fluidzuführung 111 in der Fluidzuführungsrichtung 121-1 zugeführter Brennstoff, Oxidationsmittel und Kühlmittel an der Elementunterseite 101-2 des Brennstoffzellenelements 101 wirksam umgelenkt werden können, und anschließend in der Fluidabführungsrichtung 121-2 durch die Fluidabführung 113 wieder abgeführt werden können.

Hierbei ist auch das weitere Versteifungselement 139 gegen das Brennstoffzellenelement 101 anpressbar, um das Brennstoffelement 101 zu versteifen. Insbesondere wird die Endplatte 137 gegen das weitere Versteifungselement 139 gepresst, wodurch das weitere Versteifungselement 139 gegen eine Elementunterseite 101-2 des Brennstoffzellenelements 101 gepresst wird.

Um ein wirksames Anpressen des Versteifungselements 123 gegen das Brennstoffzellenelement 101 zu erreichen, und um ein wirksames Anpressen des weiteren Versteifungselements 139 gegen das Brennstoffzellenelement 101 sicherzustellen, weist die Brennstoffzellenvorrichtung 100 eine Mehrzahl von in Fig. 1 nur schematisch dargestellten Befestigungsvorrichtungen 143 auf. Insbesondere umfassen die Befestigungsvorrichtungen 143 Befestigungsschrauben, Befestigungsbänder und/oder Befestigungsbolzen.

Die Mehrzahl der Befestigungsvorrichtungen 143 sind ausgebildet das Versteifungselement 123 gegen das Brennstoffzellenelement 101 zu pressen, insbesondere das Verteilerelement 109 gegen das Versteifungselement 123 und das Versteifungselement 123 gegen eine Elementoberseite 101-1 des Brennstoffzellenelements 101 zu pressen.

Die Mehrzahl der Befestigungsvorrichtungen 143 sind insbesondere zusätzlich ausgebildet das weitere Versteifungselement 139 gegen das Brennstoffzellenelement 101 zu pressen, insbesondere die Endplatte 137 gegen das weitere Versteifungselement 139 und das weitere Versteifungselement 139 gegen eine Elementunterseite 101-2 des Brennstoffzellenelements 101 zu pressen.

Wie aus der Fig. 1 zu entnehmen ist, weist das Verteilerelement 109, das Versteifungselement 123, das weitere Versteifungselement 139 und/oder die Endplatte 137 eine Mehrzahl von Befestigungsöffnungen 145 auf, welche jeweils fluchtend zueinander angeordnet sind, wobei die Befestigungsvorrichtungen 143 jeweils einen Befestigungsschaft 143-1, insbesondere Schraubbolzen, aufweisen, welcher durch die jeweils fluchtend zueinander angeordneten Befestigungsöffnungen 145 geführt ist, und wobei die Befestigungsvorrichtungen 143 jeweils ein Befestigungselement 143-4, insbesondere Schraubmutter, aufweisen, welches endseitig an dem Befestigungsschaft 143-1 angeordnet, insbesondere aufgeschraubt ist, um das Versteifungselement 123 gegen das Brennstoffzellenelement 101 und um das weitere Versteifungselement 139 gegen das Brennstoffzellenelement 101 zu pressen.

Die Mehrzahl der Befestigungsöffnungen 145 des Verteilerelements 109, des Versteifungselements 123, des weiteren Versteifungselements 139, und/oder der Endplatte 137 umfasst insbesondere eine Mehrzahl von Befestigungsöffnungsgruppen 145-1, 145-2, 145-n, wobei jede Befestigungsöffnungsgruppe 145-1, 145-2, 145-n eine einzelne Befestigungsöffnung 145 des Verteilerelements 109, des Versteifungselements 123, des weiteren Versteifungselements 139, und/oder der Endplatte 137 umfasst, welche jeweils fluchtend zueinander angeordnet sind, und wobei jeweils einen einzelner Befestigungsschaft 143-1 einer einzelnen Befestigungsvorrichtung 143 durch eine Befestigungsöffnungsgruppe 145-1, 145-2, 145-n geführt ist. In Fig. 1 ist nur eine erste Befestigungsöffnungsgruppe 145-1 mit Bezugszeichen markiert.

Somit kann die in Fig. 1 nur schematisch dargestellten Befestigungsvorrichtungen 143, insbesondere Befestigungsschrauben, Befestigungsbänder und/oder Befestigungsbolzen, eine hohe Anpresskraft, insbesondere zwischen 20 kN bis 30 kN, bereitstellen, so dass die einzelnen übereinander angeordneten Brennstoffzellen des Brennstoffzellenelements 101 wirksam aneinander gepresst werden.

Die Befestigungsvorrichtungen 143 weisen jeweils ein in Fig. 1 nicht dargestelltes Federelement auf, welches zwischen dem Befestigungsschaft 143-1, insbesondere Schraubbolzen, und dem Befestigungselement 143-4, insbesondere Schraubmutter, angeordnet ist, um eine konstante Presskraft bereitzustellen. Ein entsprechendes Federelement gleicht die durch die Befestigungsvorrichtungen 143 auf das Versteifungselement 123 und/oder weitere Versteifungselement 139 ausgeübten Presskräfte derart aus, dass über die gesamte Fläche des Versteifungselements 123 und/oder des weiteren Versteifungselements 139 annähernd konstante Presskräfte ausgeübt werden.

Insbesondere weisen die Befestigungsvorrichtungen 143 jeweils einen auf dem Verteilerelement 109 und/oder auf der Endplatte 137 aufliegenden Befestigungskopf 143-2, insbesondere Schraubkopf, auf, wobei insbesondere eine auf den Befestigungsschaft 143-1 gesteckte und in Fig. 1 nicht dargestellte Unterlegscheibe 143-3 zwischen dem Befestigungskopf 143-2, insbesondere Schraubkopf, und dem Verteilerelement 109 und/oder der Endplatte 137 angeordnet ist. Die Unterlegscheibe 143-3 bewirkt eine wirksame Kraftverteilung auf dem Verteilerelement 109 und/oder der Endplatte 137.

Insbesondere weist das Versteifungselement 123 und/oder das weitere Versteifungselement 139 jeweils eine ebene an dem Brennstoffzellenelement 101, insbesondere an der Elementoberseite 101-1 und/oder Elementunterseite 101-2, anliegende Pressfläche 147 auf, um mit einer gleichmäßigen Presskraft an das Brennstoffzellenelement 101, insbesondere an die Elementoberseite 101-1 und/oder Elementunterseite 101-2, angepresst zu werden.

Wie aus der Fig. 1 hervorgeht, weist die Brennstoffzellenvorrichtung 100 eine Mehrzahl von elektrischen Isolationselementen 153, insbesondere elektrische Isolationsbuchsen, auf, welche zumindest abschnittsweise in den Befestigungsöffnungen 145 angeordnet sind, um eine elektrische Isolierung zwischen den durch die Befestigungsöffnungen 145 geführten Befestigungsvorrichtungen 143 und dem elektrisch leitenden Bereich 125 des Versteifungselements 123, bzw. dem weiteren elektrisch leitenden Bereich 141 des weiteren Versteifungselements 139 sicherzustellen.

Durch das in Fig. 1 des vorliegenden Ausführungsbeispiels dargestellte Versteifungselement 123 kann eine besonders einfach und kostengünstig zu fertigende Brennstoffzellenvorrichtung 100 bereitgestellt werden, welche mit einer reduzierten Anzahl von Bauteilen auskommt.

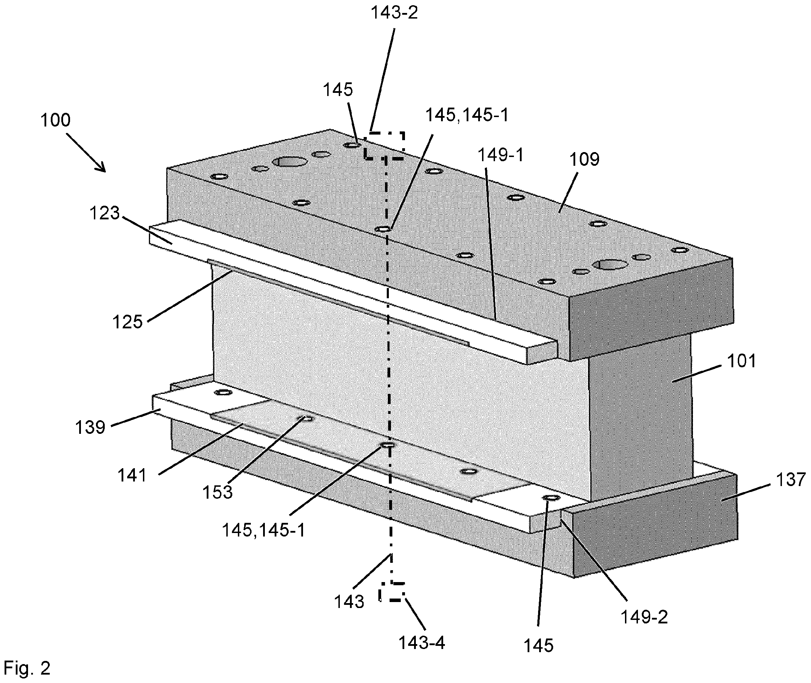

Fig. 2 zeigt eine perspektivische Ansicht der in Fig. 1 dargestellten Brennstoffzellenvorrichtung in einer Kompaktdarstellung.

In der in Fig. 2 dargestellten Kompaktdarstellung der Brennstoffzellenvorrichtung 100 wird das Verteilerelement 109 durch die in Fig. 2 nur schematisch dargestellte Befestigungsvorrichtung 143 gegen das Versteifungselement 123 gepresst und wird das Versteifungselement 123 gegen die Elementoberseite 101-1 des Brennstoffzellenelements 101 gepresst.

In der in Fig. 2 dargestellten Kompaktdarstellung der Brennstoffzellenvorrichtung 100 wird die Endplatte 137 durch die in Fig. 2 nur schematisch dargestellte Befestigungsvorrichtung 143 gegen das weitere Versteifungselement 139 gepresst und wird das weitere Versteifungselement 139 gegen die Elementunterseite 101-2 des Brennstoffzellenelements 101 gepresst.

Wie aus der Fig. 2 zu entnehmen ist, ist das Versteifungselement 123 in einer Aussparung 149-1 des Verteilerelements 109 aufgenommen und ist das weitere Versteifungselement 139 in einer weitere Aussparung 149-2 der Endplatte 137 aufgenommen.

Wie aus der Fig. 2 hervorgeht, ragen insbesondere der elektrisch leitende Bereich 125 des Versteifungselements 123 und der weitere elektrisch leitende Bereich 141 des weiteren Versteifungselements 139 über das Verteilerelement 109, das Brennstoffzellenelement 101 und die Endplatte 137 hervor, so dass eine wirksam zugängliche Stromabnahme sichergestellt werden kann.

Für weitere Details hinsichtlich der Brennstoffzellenvorrichtung 100 wird auf die detaillierten Ausführungen hierzu in der Fig. 1 verwiesen.

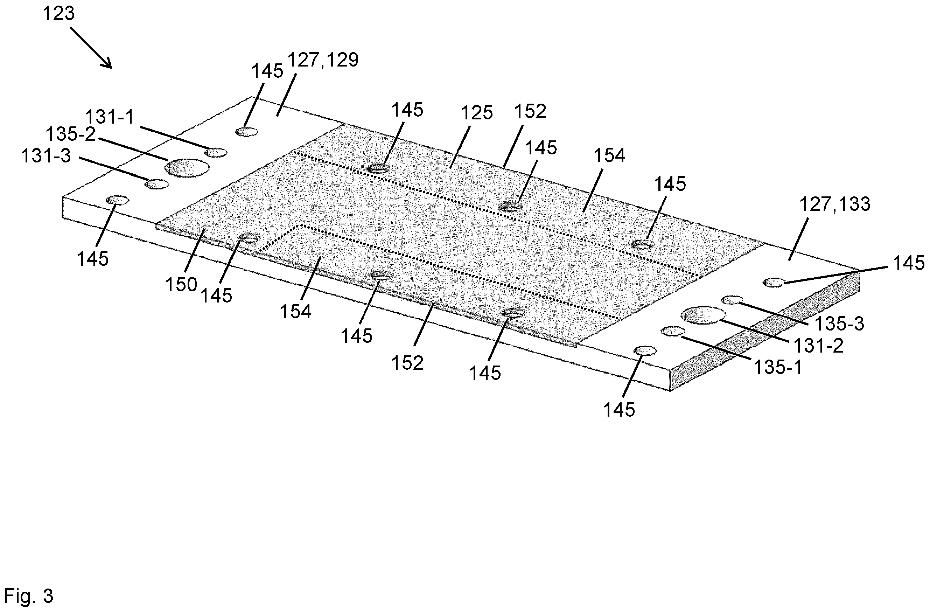

Fig. 3 zeigt eine perspektivische Ansicht eines Versteifungselements der in Fig. 1 dargestellten Brennstoffzellenvorrichtung. In der in Fig. 3 gezeigten Darstellung ist das Versteifungselement 123 gegenüber der in Fig. 1 gezeigten Darstellung um 180° um die Längsachse gedreht dargestellt.

Das Versteifungselement 123 ist in der Brennstoffzellenvorrichtung 100 zwischen dem Verteilerelement 109 und dem Brennstoffzellenelement 101 angeordnet.

Das Versteifungselement 123 weist einen elektrisch leitenden Bereich 125 und einen fluidführenden Bereich 127 auf, wobei der fluidführende Bereich 127 einen Fluidzuführungsbereich 129 mit Fluidzuführungsöffnungen 131 und einen Fluidabführungsbereich 133 mit Fluidabführungsöffnungen 135 aufweist. Für die detaillierten Funktionen der einzelnen Fluidzuführungsöffnungen 131 und Fluidabführungsöffnungen 135 wird auf die detaillierten Ausführungen hierzu in der Fig. 1 verwiesen.

In der Fig. 3 ist eine Versteifungselementunterseite des Versteifungselements 123 sichtbar, welche an eine in Fig. 3 nicht dargestellte Elementoberseite 101-1 des Brennstoffzellenelements 101 anpressbar ist.

Der elektrisch leitende Bereich 125 des Versteifungselements 123 umfasst eine elektrisch leitende Beschichtung, insbesondere eine partielle Plattierung, Einwalzen oder Eingießen mit einem elektrisch leitenden Metall, insbesondere Kupfer. Insbesondere besteht das Versteifungselement 123 aus Stahl oder Aluminium mit einem eingewalzten oder eingegossenen Kupferblech als elektrisch leitender Bereich 125.

Alternativ kann das Versteifungselement 123 auch einstückig aus dem elektrisch leitenden Bereich 125 und dem fluidführenden Bereich 127 gebildet sein.

Durch die in Fig. 3 dargestellte gestrichelte Linie wird eine alternative Ausführungsform zu der in Fig. 3 dargestellten Ausführungsform dargestellt, wobei in der alternativen Ausführungsform der elektrisch leitende Bereich 125 sich nur im Bereich einer Kontaktlasche 150 zu einem seitlichen Rand 152 des Versteifungselement 123 erstreckt, um eine wirksame Abnahme von elektrischer Energie über die Kontaktlasche 150 zu gewährleisten. In der durch die gestrichelte Linie dargestellten alternativen Ausführungsform ist insbesondere bereichsweise zwischen dem elektrisch leitenden Bereich 125 und den seitlichen Rändern 152 des Versteifungselement 123 ein Randbereich 154 des Versteifungselements 123 angeordnet. Insbesondere weist der Randbereich 154 des Versteifungselements 123 eine geringere elektrische Leitfähigkeit als der elektrisch leitende Bereich 125 des Versteifungselements 123 auf.

Insbesondere weist der elektrisch leitende Bereich 125 eine in Fig. 3 nur schematisch dargestellte Kontaktlasche 150, bzw. alternativ einen Kontaktpin auf.

Zudem zeigt die Fig. 3 noch eine Mehrzahl von Befestigungsöffnungen 145, durch welche jeweils eine in Fig. 3 nicht dargestellte Befestigungsvorrichtung 143 geführt ist.

Für weitere Details hierzu wird auf die Fig. 1 verwiesen.

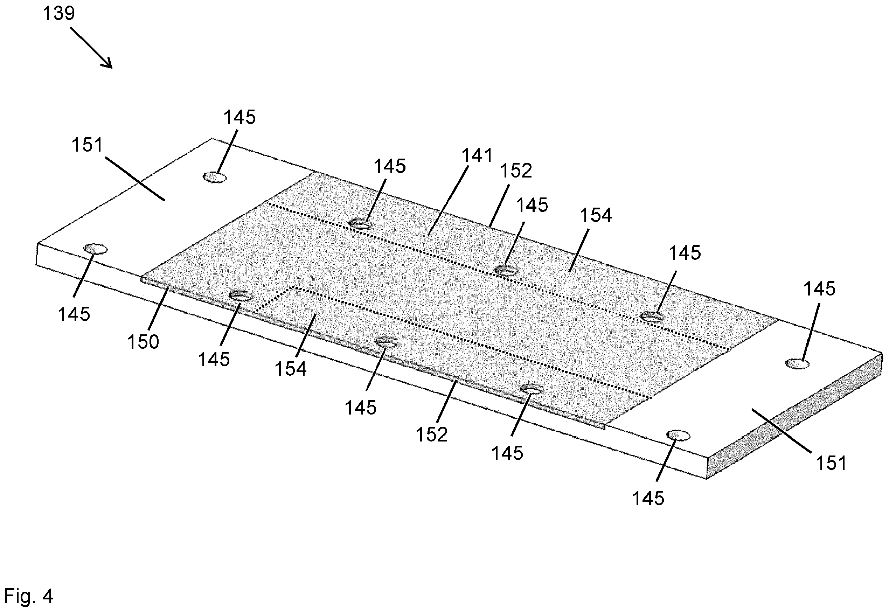

Fig. 4 zeigt eine perspektivische Ansicht eines weiteren Versteifungselements der in Fig. 1 dargestellten Brennstoffzellenvorrichtung.

Das in Fig. 4 dargestellte weitere Versteifungselement 139 mit dem weiteren elektrisch leitenden Bereich 141 ist in der Brennstoffzellenvorrichtung 100 zwischen der Endplatte 137 und dem Brennstoffzellenelement 101 angeordnet.

Insbesondere weist das weitere Versteifungselement 139 keinen fluidführenden Bereich auf, sondern schließt fluiddicht mit der in Fig. 4 nicht dargestellten Elementunterseite 101-2 des Brennstoffzellenelements 101 ab. Somit sind in dem weiteren Versteifungselement 139 auch keine Fluidzuführungsöffnungen 131 und auch keine Fluidabführungsöffnungen 135 angeordnet, sondern lediglich die Mehrzahl an Befestigungsöffnungen 145, durch welche jeweils eine Befestigungsvorrichtung 143 geführt ist.

Wie aus der Fig. 4 hervorgeht ist der weitere elektrisch leitende Bereich 141 an einer weiteren Versteifungselementoberseite angeordnet, welche der Elementunterseite 101-2 des Brennstoffzellenelements 101 zugewandt ist.

Ferner ist der weitere elektrisch leitende Bereich 141 insbesondere in der Mitte des weiteren Versteifungselements 139 angeordnet, wohingegen an den Enden des weiteren Versteifungselements 139 statt des fluidführenden Bereichs 127 lediglich ein Endbereich 151 des weiteren Versteifungselements 139 angeordnet ist, welcher insbesondere fluiddicht mit den entsprechenden Fluidkanälen des Brennstoffzellenelements 101 abschließt.

Der weitere elektrisch leitende Bereich 141 des weiteren Versteifungselements 139 umfasst eine elektrisch leitende Beschichtung, insbesondere eine partielle Plattierung, Einwalzen oder Eingießen mit einem elektrisch leitenden Metall, insbesondere Kupfer. Insbesondere besteht das weitere Versteifungselement 139 aus Stahl oder Aluminium mit einem eingewalzten oder eingegossenen Kupferblech als weiteren elektrisch leitender Bereich 141.

Durch die in Fig. 4 dargestellte gestrichelte Linie wird eine alternative Ausführungsform zu der in Fig. 4 dargestellten Ausführungsform dargestellt, wobei hierzu auf die Ausführungen zur Fig. 3 verwiesen wird.

Für weitere Details wird auf die vorangegangenen Ausführungsformen verwiesen.

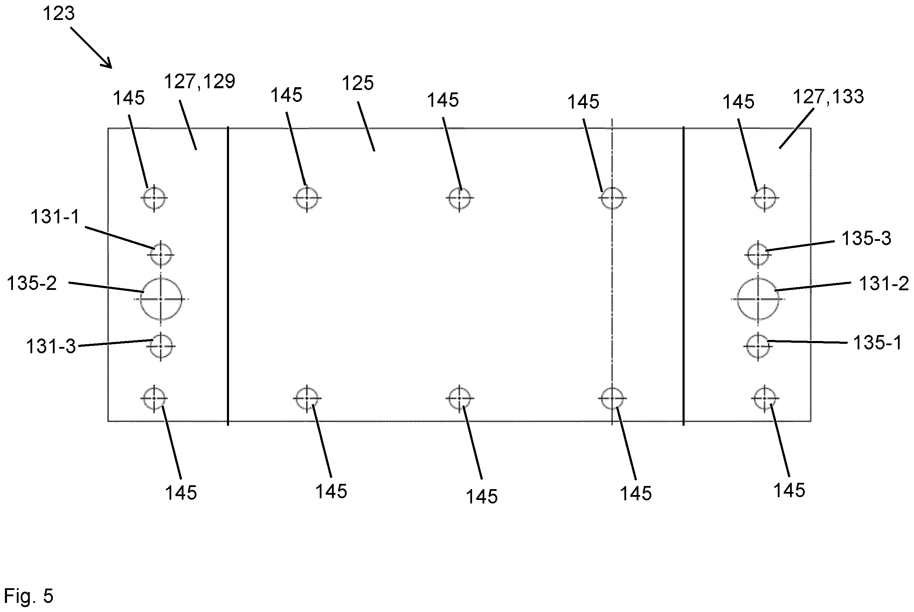

Fig. 5 zeigt eine perspektivische Ansicht eines Versteifungselements gemäß einer weiteren Ausführungsform der vorliegenden Anmeldung.

Das in Fig. 5 dargestellte Versteifungselement 123 gemäß der weiteren Ausführungsform weist einen elektrisch leitenden Bereich 125 und einen fluidführenden Bereich 127 mit einem Fluidzuführungsbereich 129 mit Fluidzuführungsöffnungen 131, und mit einem Fluidabführungsbereich 133 mit Fluidabführungsöffnungen 135 auf.

Zudem weist das in Fig. 5 dargestellte Versteifungselement 123 eine Mehrzahl von Befestigungsöffnungen 145 auf.

Für weitere Details wird auf die Fig. 1 und die Fig. 3 verwiesen.

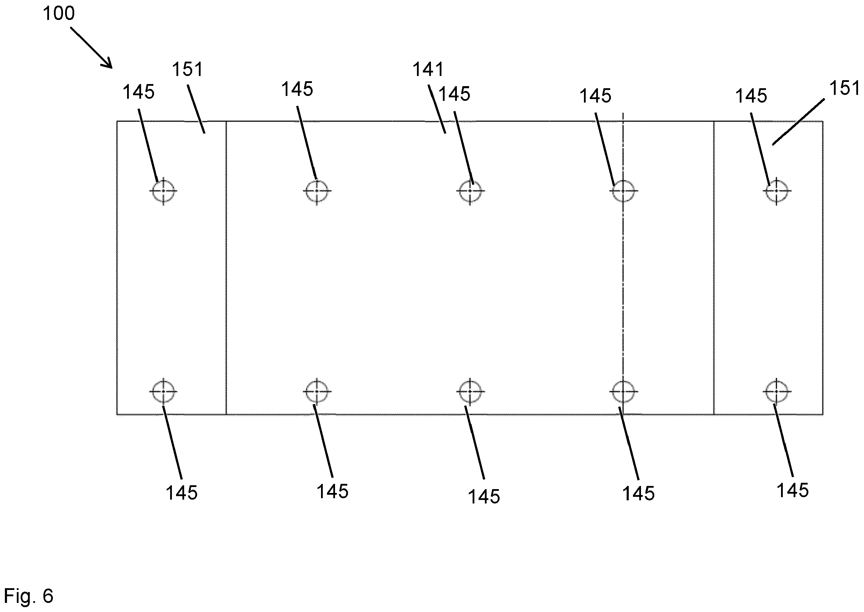

Fig. 6 zeigt eine perspektivische Ansicht eines weiteren Versteifungselements gemäß einer weiteren Ausführungsform der vorliegenden Anmeldung.

Das in Fig. 6 dargestellte weitere Versteifungselement 139 gemäß der weiteren Ausführungsform weist einen weiteren elektrisch leitenden Bereich 141 und einen Endbereich 151 auf.

Zudem weist das in Fig. 6 dargestellte weitere Versteifungselement 139 eine Mehrzahl von Befestigungsöffnungen 145 auf.

Für weitere Details wird auf die Fig. 1 und die Fig. 4 verwiesen.

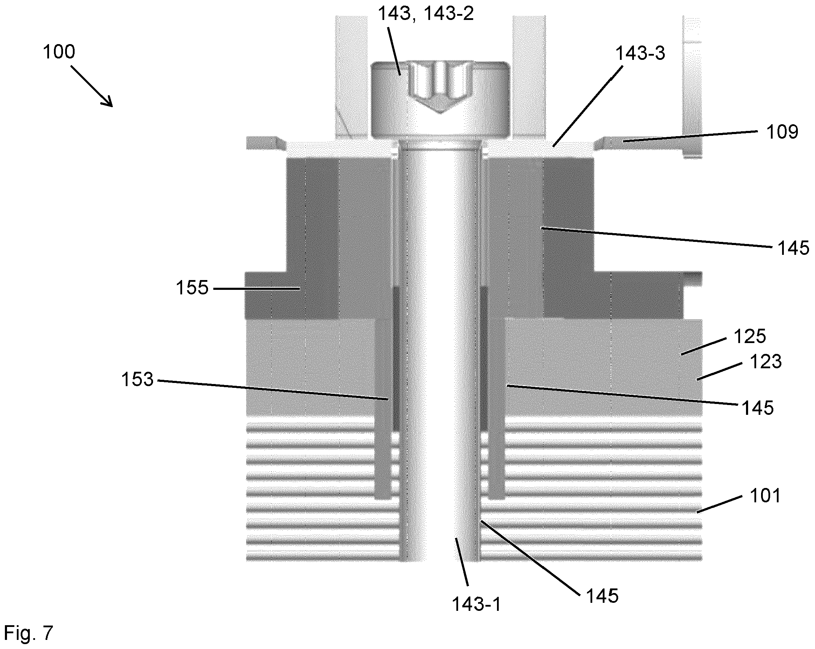

Fig. 7 zeigt eine schematische Ansicht einer Befestigungsvorrichtung in einer Brennstoffzellenvorrichtung gemäß einer weiteren Ausführungsform der vorliegenden Anmeldung. Die in Fig. 7 gezeigte Schnittdarstellung zeigt nur einen begrenzten Querschnitt einer Brennstoffzellenvorrichtung 100.

Die in Fig. 7 dargestellte Befestigungsvorrichtung 143 weist einen Befestigungsschaft 143-1 auf, welcher durch eine Befestigungsöffnung 145 des Verteilerelements 109, durch eine Befestigungsöffnung 145 des Versteifungselements 123 und durch eine Befestigungsöffnung 145 des Brennstoffzellenelements 101 geführt ist.

Die in Fig. 7 dargestellte Befestigungsvorrichtung 143 weist einen Befestigungskopf 143-2 auf, welcher auf einer Verteilerelementoberseite des Verteilerelements 109 aufliegt, wobei insbesondere eine Unterlegscheibe 143-3 zwischen dem Befestigungskopf 143-2 und der Verteilerelementoberseite des Verteilerelements 109 angeordnet ist, um eine gleichmäßige Krafteinleitung sicherzustellen.

Fig. 7 zeigt ferner ein Isolationselement 153, insbesondere eine elektrische Isolationsbuchse, welche zumindest abschnittsweise in den Befestigungsöffnungen 145 angeordnet ist. Wie aus der Fig. 7 zu entnehmen ist das Isolationselement 153 in der Befestigungsöffnung 145 des Verteilerelements 109, in der Befestigungsöffnung 145 des Versteifungselements 123 und zumindest abschnittsweise in der Befestigungsöffnung 145 des Brennstoffzellenelements 101 angeordnet. Insbesondere wird das Isolationselement 153 an dessen Oberseite durch die Unterlegscheibe 143-3 fixiert.

Ein Befestigungselement 143-4, insbesondere Befestigungsmutter, welche an einem in Fig. 7 nicht dargestellten Ende der Befestigungsvorrichtung 143 angeordnet ist, ist in der Fig. 7 nicht gezeigt.

Wie aus der Fig. 7 zu nehmen ist, wird das Isolationselement 153 an einer der Befestigungsvorrichtung 143 abgewandten Seite durch ein Kunststoffelement 155 gestützt, wobei das Kunststoffelement 155 insbesondere zwischen der Unterlegscheibe 143-3 und dem elektrisch leitenden Bereich 125 des Versteifungselements 123 angeordnet ist.

Somit stellt das Isolationselement 153 eine besonders wirksame elektrische Isolierung zwischen der Befestigungsvorrichtung 143 und dem elektrisch leitenden Bereich 125 des Versteifungselements 123 sicher, so dass die Gefahr von Kurzschlüssen minimiert wird.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Brennstoffzellenvorrichtung
- 101: Brennstoffzellenelement
- 101-1: Elementoberseite
- 101-2: Elementunterseite
- 103-1: Brennstoffzuführungskanal
- 103-2: Brennstoffabführungskanal
- 105-1: Oxidationsmittelzuführungskanal
- 105-2: Oxidationsmittelabführungskanal
- 107-1: Kühlmittelzuführungskanal
- 107-2: Kühlmittelabführungskanal
- 109: Verteilerelement
- 111: Fluidzuführung
- 113: Fluidabführung
- 115-1: Brennstoffzuführung
- 115-2: Brennstoffabführung
- 117-1: Oxidationsmittelzuführung
- 117-2: Oxidationsmittelabführung
- 119-1: Kühlmittelzuführung
- 119-2: Kühlmittelabführung
- 121-1: Fluidzuführungsrichtung
- 121-2: Fluidabführungsrichtung
- 123: Versteifungselement
- 125: Elektrisch leitender Bereich des Versteifungselements
- 127: Fluidführender Bereich des Versteifungselements
- 129: Fluidzuführungsbereich des fluidführenden Bereichs
- 131: Fluidzuführungsöffnungen des Fluidzuführungsbereichs
- 131-1: Brennstoffzuführungsöffnung
- 131-2: Oxidationsmittelzuführungsöffnung
- 131-3: Kühlmittelzuführungsöffnung
- 133: Fluidabführungsbereich des fluidführenden Bereichs
- 135: Fluidabführungsöffnungen des Fluidabführungsbereichs
- 135-1: Brennstoffabführungsöffnung
- 135-2: Oxidationsmittelabführungsöffnung
- 135-3: Kühlmittelabführungsöffnung
- 137: Endplatte
- 139: Weiteres Versteifungselement
- 141: Weiterer elektrisch leitender Bereich
- 143: Befestigungsvorrichtung
- 143-1: Befestigungsschaft
- 143-2: Befestigungskopf
- 143-3: Unterlegscheibe
- 143-4: Befestigungselement
- 145: Befestigungsöffnung
- 145-1: Erste Befestigungsöffnungsgruppe
- 145-2: Zweite Befestigungsöffnungsgruppe
- 145-n: n-te Befestigungsöffnungsgruppe
- 147: Pressfläche
- 149-1: Aussparung des Verteilerelements
- 149-2: Aussparung der Endplatte
- 150: Kontaktlasche
- 151: Endbereich des weiteren Versteifungselements
- 152: Rand des Versteifungselements
- 153: Isolationselement
- 154: Randbereich des Versteifungselements
- 155: Kunststoffelement

## Patentansprüche

1. Brennstoffzellenvorrichtung (100), mit:
einem Brennstoffzellenelement (101) zum Bereitstellen von elektrischer Energie durch die Oxidation eines Brennstoffs mit einem Oxidationsmittel,
einem Verteilerelement (109), welches eine Fluidzuführung (111) zum Zuführen von Brennstoff und Oxidationsmittel zu dem Brennstoffzellenelement (101) und eine Fluidabführung (113) zum Abführen von Brennstoff, Oxidationsmittel und Reaktionsprodukt von dem Brennstoffzellenelement (101) aufweist,
einem Versteifungselement (123), welches zwischen dem Verteilerelement (109) und dem Brennstoffzellenelement (101) angeordnet ist, wobei das Versteifungselement (123) gegen das Brennstoffzellenelement (101) anpressbar ist, um das Brennstoffzellenelement (101) zu versteifen,
wobei das Versteifungselement (123) einen elektrisch leitenden Bereich (125) aufweist, welcher mit dem Brennstoffzellenelement (101) elektrisch leitend verbunden und ausgebildet ist, von dem Brennstoffzellenelement (101) bereitgestellte elektrische Energie abzuführen,
wobei das Versteifungselement (123) einen fluidführenden Bereich (127) aufweist, welcher mit der Fluidzuführung (111) und Fluidabführung (113) des Verteilerelements (109) und welcher mit dem Brennstoffzellenelement (101) fluidtechnisch verbunden ist,
um Brennstoff und Oxidationsmittel von der Fluidzuführung (111) durch den fluidführenden Bereich (127) dem Brennstoffzellenelement (101) zuzuführen, und um Brennstoff, Oxidationsmittel und Reaktionsprodukt von dem Brennstoffzellenelement (101) durch den fluidführenden Bereich (127) und die Fluidabführung (113) des Verteilerelements (109) abzuführen, und
wobei der fluidführende Bereich (127) und der elektrisch leitende Bereich (125) integral in dem Versteifungselement (123) gebildet sind.

2. Brennstoffzellenvorrichtung (100) nach Anspruch 1, wobei das Versteifungselement (123) gegen eine Elementoberseite (101-1) des Brennstoffzellenelements (101) anpressbar ist, wobei die Brennstoffzellenvorrichtung (100) eine Endplatte (137) und ein weiteres Versteifungselement (139) aufweist, wobei das weitere Versteifungselement (139) zwischen der Endplatte (137) und einer Elementunterseite (101-2) des Brennstoffzellenelements (101) angeordnet ist, wobei das weitere Versteifungselement (139) gegen die Elementunterseite (101-2) des Brennstoffzellenelements (101) anpressbar ist, um das Brennstoffzellenelement (101) zu versteifen, wobei das weitere Versteifungselement (139) einen weiteren elektrisch leitenden Bereich (141) aufweist, welcher mit dem Brennstoffzellenelement (101) elektrisch leitend verbunden und ausgebildet ist, von dem Brennstoffzellenelement (101) bereitgestellte elektrische Energie abzuführen.

3. Brennstoffzellenvorrichtung (100) nach Anspruch 1 oder 2, wobei die Brennstoffzellenvorrichtung (100) eine Mehrzahl von Befestigungsvorrichtungen (143), insbesondere Befestigungsschrauben, Befestigungsbänder und/oder Befestigungsbolzen, umfasst, welche ausgebildet sind, das Versteifungselement (123) gegen das Brennstoffzellenelement (101) zu pressen, und/oder das weitere Versteifungselement (139) gegen die Elementunterseite (101-2) des Brennstoffzellenelements (101) zu pressen.

4. Brennstoffzellenvorrichtung (100) nach Anspruch 3, wobei das Verteilerelement (109), das Versteifungselement (123), das weitere Versteifungselement (139), das Brennstoffzellenelement (101), und/oder die Endplatte (137) einer Mehrzahl von Befestigungsöffnungen (145) aufweisen, welche jeweils fluchtend zueinander angeordnet sind, wobei die Befestigungsvorrichtungen (143) jeweils einen Befestigungsschaft (143-1), insbesondere Schraubbolzen, aufweisen, welcher durch die jeweils fluchtend zueinander angeordneten Befestigungsöffnungen (145) geführt ist, und wobei die Befestigungsvorrichtungen (143) jeweils ein Befestigungselement (143-4), insbesondere Schraubmutter, aufweisen, welches endseitig an dem Befestigungsschaft (143-1) angeordnet, insbesondere aufgeschraubt ist.

5. Brennstoffzellenvorrichtung (100) nach Anspruch 4, wobei die Befestigungsvorrichtungen (143) jeweils ein Federelement aufweisen, welches zwischen dem Befestigungsschaft (143-1), insbesondere Schraubbolzen, und dem Befestigungselement (143-4), insbesondere Schraubmutter, angeordnet ist, um eine konstante Presskraft bereitzustellen.

6. Brennstoffzellenvorrichtung (100) nach Anspruch 4 oder 5, wobei die Befestigungsvorrichtungen (143) jeweils einen auf dem Verteilerelement (109) und/oder auf der Endplatte (137) aufliegenden Befestigungskopf (143-2), insbesondere Schraubkopf, aufweisen, wobei insbesondere eine auf den Befestigungsschaft (143-1) gesteckte Unterlegscheibe (143-3) zwischen dem Befestigungskopf (143-2), insbesondere Schraubkopf, und dem Verteilerelement (109) und/oder der Endplatte (137) angeordnet ist.

7. Brennstoffzellenvorrichtung (100) nach einem der vorangehenden Ansprüche, wobei das Versteifungselement (123) und/oder das weitere Versteifungselement (139) jeweils eine ebene an dem Brennstoffzellenelement (101), insbesondere an der Elementoberseite (101-1) und/oder Elementunterseite (101-2), anliegende Pressfläche (147) aufweisen, insbesondere ebene Pressfläche (147) aufweisen, um mit einer gleichmäßigen Presskraft an das Brennstoffzellenelement (101), insbesondere an die Elementoberseite (101-1) und/oder Elementunterseite (101-2), angepresst zu werden.

8. Brennstoffzellenvorrichtung (100) nach einem der Anspruch 4 bis 7, wobei die Brennstoffzellenvorrichtung (100) eine Mehrzahl von elektrischen Isolationselementen (153), insbesondere elektrische Isolationsbuchsen, aufweist, welche zumindest abschnittsweise in den Befestigungsöffnungen (145) angeordnet sind.

9. Brennstoffzellenvorrichtung (100) nach Anspruch 8, wobei die elektrischen Isolationselemente (153), insbesondere elektrische Isolationsbuchsen, vollständig in den in dem elektrisch leitenden Bereich (125) des Versteifungselements (123) angeordneten Befestigungsöffnungen (145) angeordnet sind, und/oder wobei die elektrischen Isolationselemente (153), insbesondere elektrische Isolationsbuchsen, vollständig in den in dem weiteren elektrisch leitenden Bereich (141) des weiteren Versteifungselements (139) angeordneten Befestigungsöffnungen (145) angeordnet sind.

10. Brennstoffzellenvorrichtung (100) nach einem der vorangehenden Ansprüche, wobei der fluidführende Bereich (127) des Versteifungselements (123) einen Fluidzuführungsbereich (129) mit Fluidzuführungsöffnungen (131, 131-1, 131-2, 131-3) zum Zuführen von Brennstoff, Oxidationsmittel und/oder Kühlmittel und einen Fluidabführungsbereich (133) mit Fluidabführungsöffnungen (135, 135-1, 135-2, 135-3) zum Abführen von Brennstoff, Oxidationsmittel, Reaktionsprodukt und/oder Kühlmittel aufweist, wobei der Fluidzuführungsbereich (129) beabstandet von dem Fluidzuführungsbereich (129) in dem Versteifungselement (123) angeordnet ist, wobei insbesondere der elektrisch leitende Bereich (125) zwischen dem Fluidzuführungsbereich (129) und dem Fluidabführungsbereich (133) angeordnet ist.

11. Brennstoffzellenvorrichtung (100) nach Anspruch 10, wobei der Fluidzuführungsbereich (129) jeweils zumindest zwei fluidtechnisch getrennte Fluidzuführungsöffnungen (131, 131-1, 131-2, 131-3) zum fluidtechnisch getrennten Zuführen von Brennstoff, Oxidationsmittel und/oder Kühlmittel, insbesondere drei fluidtechnisch getrennte Fluidzuführungsöffnungen (131, 131-1, 131-2, 131-3), aufweist, und/oder wobei der Fluidabführungsbereich (133) jeweils zumindest zwei fluidtechnisch getrennte Fluidabführungsöffnungen (135, 135-1, 135-2, 135-3) zum fluidtechnisch getrennten Abführen von Brennstoff, Oxidationsmittel, Reaktionsprodukt und/oder Kühlmittel, insbesondere drei fluidtechnisch getrennte Fluidabführungsöffnungen (135, 135-1, 135-2, 135-3), aufweist.

12. Brennstoffzellenvorrichtung (100) nach Anspruch 10 oder 11, wobei die Fluidzuführungsöffnungen (131, 131-1, 131-2, 131-3) des Fluidzuführungsbereichs (129) umfassen eine Brennstoffzuführungsöffnung (131-1) zum Zuführen des Brennstoffs, insbesondere Wasserstoff, eine Oxidationsmittelzuführungsöffnung (131-2) zum Zuführen des Oxidationsmittels, insbesondere Sauerstoff, und eine Kühlmittelzuführungsöffnung (131-3) zum Zuführen des Kühlmittels, insbesondere Kühlwasser, umfassen, und/oder
wobei die Fluidabführungsöffnungen (135, 135-1, 135-2, 135-3) des Fluidabführungsbereichs (133) eine Brennstoffabführungsöffnung (135-1) zum Abführen des Brennstoffs, insbesondere Wasserstoff, eine Oxidationsmittelabführungsöffnung (135-2) zum Abführen des Oxidationsmittels, insbesondere Sauerstoff, und eine Kühlmittelabführungsöffnung (135-3) zum Abführen des Kühlmittels, insbesondere Kühlwasser, umfassen.

13. Brennstoffzellenvorrichtung (100) nach einem der vorangehenden Ansprüche, wobei der elektrisch leitende Bereich (125) des Versteifungselements (123) und/oder der weitere elektrisch leitende Bereich (141) des weiteren Versteifungselements (139) jeweils einen Abführkontakt und/oder einen weiteren Abführkontakt aufweisen, welcher mit einem externen Stromleiter verbindbar ist, um die von dem Brennstoffzellenelement (101) bereitgestellte elektrische Energie von der Brennstoffzellenvorrichtung (100) abzuführen, wobei der Abführkontakt und/oder der weitere Abführkontakt insbesondere als eine Kontaktlasche oder ein Kontaktpin, insbesondere als eine gebogene Kontaktlasche oder ein geschweißter Kontaktpin ausgebildet ist.

14. Brennstoffzellenvorrichtung (100) nach einem der vorangehenden Ansprüche, wobei der elektrisch leitende Bereich (125) des Versteifungselements (123) mit einem elektrisch leitenden Kontaktelement, insbesondere Pluspol, an einer Elementoberseite (101-1) des Brennstoffzellenelements (101), elektrisch leitend verbunden ist, und/oder wobei der weitere elektrisch leitende Bereich (141) des weiteren Versteifungselements (139) mit einem weiteren elektrisch leitenden Kontaktelement, insbesondere Minuspol, an einer Elementunterseite (101-2) des Brennstoffzellenelements (101) verbunden ist.

15. Brennstoffzellenvorrichtung (100) nach einem der vorangehenden Ansprüche, wobei der elektrisch leitende Bereich (125) des Versteifungselements (123) und/oder der weitere elektrisch leitende Bereich (141) des weiteren Versteifungselements (139) eine elektrisch leitende Beschichtung, insbesondere eine partielle Plattierung, ein Einwalzen oder ein Eingießen mit einem elektrisch leitenden Metall, insbesondere Kupfer, umfasst.
